# EUROPEAN PATENT APPLICATION

(11) **EP 4 751 911 A1**
(43) Date of publication of application: **03.06.2026**
(21) Application number: 24845565.1
(22) Date of filing: 19.07.2024
(51) Int. Cl.: B32B 27/32, B32B 9/00, B32B 27/00, B65D 65/40

(54) **GAS-BARRIER FILM, MULTILAYER OBJECT, AND PACKAGING MATERIAL**

(30) Priority: 27.07.2023 JP 2023122187; 27.07.2023 JP 2023122188
(71) Applicant: Toppan Holdings Inc., Tokyo 110-0016 (JP)
(72) Inventor: TAKEI, Ryo, Tokyo 110-0016 (JP); KATO, Ryoji, Tokyo 110-0016 (JP); EJIMA, Yuki, Tokyo 110-0016 (JP)
(74) Representative: Hoffmann Eitle
(86) International application number: PCT/JP2024/026024
(87) International publication number: WO 2025/023189

(57) **Abstract**

A gas barrier film includes a multilayer polyethylene film and a gas barrier layer, in which the multilayer polyethylene film includes at least three layers of a front layer, an intermediate layer, and a rear layer in this order on the gas barrier layer side; the intermediate layer has a probe descent temperature which is higher than that of the front layer and is higher than or equal to that of the rear layer; the front layer is constituted of a medium-density polyethylene resin having a density of 0.926 g/cm³ or more, or a high-density polyethylene resin; and the gas barrier layer includes at least either of an inorganic oxide layer and a gas barrier coating layer.

## Description

### [Technical Field]

The present invention relates to gas barrier films, laminates, and packaging materials.

### [Background Art]

Packaging materials used for packaging food products or pharmaceutical products are required to have properties (gas barrier properties) preventing entry of gases (water vapor, oxygen, etc.) that deteriorate the contents to protect the contents from deterioration, spoilage, and the like, and maintain the functions and quality of the contents. Furthermore, packaging materials are required to have excellent heat resistance because they may undergo heat sterilization treatment such as boiling treatment. Therefore, these packaging materials use laminates having gas barrier properties and heat resistance (gas barrier films).

As gas barrier films, those films are known in which a gas barrier layer made of a material having gas barrier properties is provided on the surface of a resin substrate. As gas barrier layers, there are known metal foils, vapor-deposited metal films, coating films formed using wet coating methods, etc. As resin substrates, there are known polyolefin films such as polyethylene films. For example, PTL 1 describes an aluminum-deposited polyethylene film characterized by having an aluminum-deposited film provided on the surface of an unstretched polyethylene film having a thickness of less than 30 µm and made of linear low-density polyethylene produced using a metallocene catalyst.

Furthermore, studies have been conducted to improve properties of gas barrier films by providing a resin substrate in the form of a laminate in which multiple resin layers are laminated. For example, PTL 2 describes a film as a film that can suppress wrinkling, including a resin layer having a first surface and a second surface, and a vapor deposition layer provided on the second surface of the resin layer. In the film, the resin layer includes a first layer constituting the first surface, and at least one hard layer having a density higher than that of the first layer and having a density of 0.934 g/cm³ or more, and the total thickness of the hard layers is 60% or more relative to the total thickness of the resin layer.

### [Citation List]

### [Patent Literature]

PTL 1: JP2001179878A
PTL 2: JP201824213A

### [Summary of the Invention]

### [Technical Problem]

In recent years, due to rising environmental awareness triggered by the issues of marine plastic waste and the like, there is a growing demand for further increasing the efficiency of sorting, collecting, and recycling plastic materials, and there is also a growing demand for monomaterialization of packaging materials.

However, as a result of the present inventors' diligent research during promotion of monomaterialization of gas barrier films, it was found that depending on the type of the polyethylene resin constituting each layer of the polyethylene film, wrinkling may occur on the surface of the polyethylene film, or it may become difficult to form a gas barrier layer or to provide sufficient heat resistance.

Therefore, the present invention aims to provide, as an aspect, a gas barrier film having excellent processing stability exhibited when forming a gas barrier layer and excellent heat resistance that can maintain gas barrier properties even after heat sterilization treatment.

### [Solution to Problems]

An aspect of the present invention includes the following [1] to [14].
[1] A gas barrier film including a multilayer polyethylene film and a gas barrier layer, wherein
   the multilayer polyethylene film includes at least three layers of a front layer, an intermediate layer, and a rear layer in this order on the gas barrier layer side;
   the intermediate layer has a probe descent temperature which is higher than that of the front layer and is higher than or equal to that of the rear layer;
   the front layer is constituted of a medium-density polyethylene resin having a density of 0.926 g/cm³ or more, or a high-density polyethylene resin; and
   the gas barrier layer includes at least either of an inorganic oxide layer and a gas barrier coating layer.
[2] The gas barrier film according to [1], wherein the multilayer polyethylene film has a density of 0.942 g/cm³ or more.
[3] The gas barrier film according to [1] or [2], wherein the intermediate layer has a probe descent temperature of 125°C or higher.
[4] The gas barrier film according to any one of [1] to [3], wherein the intermediate layer has a thickness that is 33% or more of a thickness of the multilayer polyethylene film.
[5] The gas barrier film according to any one of [1] to [4], wherein the multilayer polyethylene film has an absolute value of a degree of molecular orientation of less than 1.07.
[6] The gas barrier film according to any one of [1] to [5], wherein
   the gas barrier layer includes the inorganic oxide layer; and
   the inorganic oxide layer contains at least either of aluminum oxide and silicon oxide.
[7] The gas barrier film according to any one of [1] to [6], wherein
   the gas barrier layer includes the gas barrier coating layer; and
   the gas barrier coating layer contains a water-soluble polymer and at least one selected from a group consisting of metal alkoxides, their hydrolysates, and reaction products thereof.
[8] The gas barrier film according to any one of [1] to [7], wherein
   the gas barrier layer includes the gas barrier coating layer; and
   the gas barrier coating layer contains at least one selected from a group consisting of silane coupling agents, their hydrolysates, and reaction products thereof.
[9] The gas barrier film according to [1] to [8], wherein
   the gas barrier layer includes the gas barrier coating layer; and
   the gas barrier coating layer contains a polyvalent metal salt of a carboxylic acid.
[10] A laminate including
   the gas barrier film according to any one of [1] to [9];
   an adhesive layer disposed on a surface of the gas barrier layer facing away from a surface provided with the multilayer polyethylene film; and
   a sealant layer disposed via the adhesive layer.
[11] The laminate according to [10], wherein a content of a polyethylene resin in the laminate is 90 mass% or more relative to a total mass of the laminate.
[12] The laminate according to [10] or [11], wherein the adhesive layer contains a gas barrier adhesive.
[13] The laminate according to any one of [10] to [12] further comprising
   a second adhesive layer disposed on a rear layer-side surface of the multilayer polyethylene film; and
   a substrate disposed via the second adhesive layer.
[14] A packaging material including the laminate according to any one of [10] to [13].

### [Advantageous Effects of the Invention]

According to an aspect of the present invention, there can be provided a gas barrier film having excellent processing stability exhibited when providing a gas barrier layer and excellent heat resistance that can maintain gas barrier properties even after heat sterilization treatment. According to another aspect of the present invention, there can be provided a laminate having excellent recyclability, excellent processing stability exhibited when providing a gas barrier layer, excellent heat resistance that can maintain gas barrier properties even after heat sterilization treatment, and adhesion to a heat seal layer.

### [Brief Description of the Drawings]

Fig. 1 is a cross-sectional view illustrating a gas barrier film according to an embodiment of the present invention.
Fig. 2 is a cross-sectional view illustrating a gas barrier film according to another embodiment of the present invention.
Fig. 3 is a cross-sectional view illustrating a gas barrier film according to still another embodiment of the present invention.
Fig. 4 is a cross-sectional view illustrating a laminate according to an embodiment of the present invention.
Fig. 5 is a cross-sectional view illustrating a laminate according to another embodiment of the present invention.
Fig. 6 is a cross-sectional view illustrating a laminate according to still another embodiment of the present invention.
Fig. 7 is a cross-sectional view illustrating a laminate according to still another embodiment of the present invention.

### [Description of the Embodiments]

Referring to the drawings, some embodiments of the present disclosure will be described in detail. The drawings are only schematic and, for example, the relationship between the thickness and planar dimensions, and the thickness ratio between layers are not to scale. The embodiments described below are merely examples of the configurations for embodying the technical idea of the present disclosure, and the technical idea of the present disclosure should not limit the materials, shapes, structures, and the like of the components to those described below.

### [Gas barrier film]

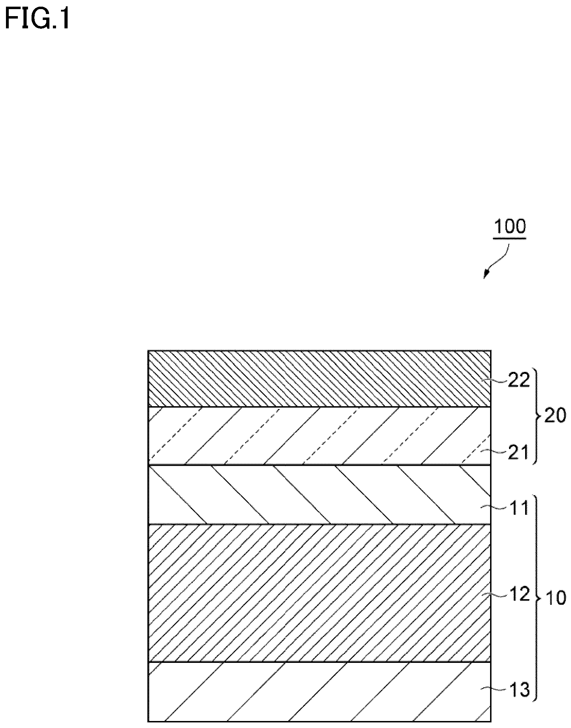

Fig. 1 is a cross-sectional view illustrating a gas barrier film according to an embodiment of the present invention. A gas barrier film 100 includes at least a multilayer polyethylene film 10 and a gas barrier layer 20.

From the perspective of achieving monomaterialization and excellent recycleability, the content of the polyethylene resin in the gas barrier film 100 may be 90 mass% or more, or 95 mass% or more relative to the total mass of the gas barrier film 100.

From the perspective of easily achieving excellent heat resistance and stable production, the gas barrier film 100 may have a thickness of 5 µm or more, 10 µm or more, or 15 µm or more, and from the perspective of cost, the thickness may be 100 µm or less, 60 µm or less, or 40 µm or less.

### <Multilayer polyethylene film>

The multilayer polyethylene film 10 includes three layers, i.e., a front layer 11, an intermediate layer 12, and a rear layer 13, in this order on the gas barrier layer 20 side. The front layer 11 and the rear layer 13 serve as outermost layers of the multilayer polyethylene film 10.

From the perspective of achieving monomaterialization and excellent recycleability, the content of the polyethylene resin in the multilayer polyethylene film 10 may be 90 mass% or more, or 95 mass% or more relative to the total mass of the multilayer polyethylene film 10.

From the perspective of further reducing occurrence of wrinkling, achieving even better processing stability, more easily maintaining gas barrier properties and adhesion even after heat sterilization treatment, and achieving even better heat resistance, the multilayer polyethylene film 10 may have a density of 0.935 g/cm³ or more, 0.940 g/cm³ or more, 0.945 g/cm³ or more, 0.950 g/cm³ or more, or 0.955 g/cm³ or more. From the perspective of further reducing occurrence of wrinkling, achieving even better processing stability, more easily maintaining gas barrier properties and adhesion even after heat sterilization treatment, and achieving even better heat resistance, the density of the multilayer polyethylene film 10 may be 0.980 g/cm³ or less, 0.975 g/cm³ or less, 0.970 g/cm³ or less, 0.965 g/cm³ or less, or 0.960 g/cm³ or less. From these perspectives, the density of the multilayer polyethylene film 10 may be 0.935 to 0.980 g/cm³, 0.940 to 0.975 g/cm³, 0.945 to 0.970 g/cm³, 0.950 to 0.965 g/cm³, or 0.955 to 0.960 g/cm³.

The multilayer polyethylene film 10 may be unstretched. The multilayer polyethylene film 10 being unstretched means that the absolute value of the degree of molecular orientation of the multilayer polyethylene film is less than 1.07. If the multilayer polyethylene film 10 is unstretched (with the absolute value of the degree of molecular orientation being less than 1.07), the gas barrier layer 20 is less likely to peel off in the vicinity of the front layer 11 of the multilayer polyethylene film 10, and excellent adhesion to the gas barrier layer 20 may be achieved. The absolute value of the degree of molecular orientation may be 1 or more, 1.02 or more, or 1.04 or more. From these perspectives, the absolute value of the degree of molecular orientation may be 1 or more and less than 1.07, 1.02 or more and less than 1.07, or 1.04 or more and less than 1.07. The absolute value of the degree of molecular orientation means the value that is measured using the method described in the embodiment described later.

The thickness of the multilayer polyethylene film 10 is not specifically limited, but can be appropriately determined depending on cost or applications while taking account of the suitability as a packaging material or the lamination suitability to other layers. From the perspective of improving processability, the thickness of the multilayer polyethylene film 10 may be 3 µm or more, 5 µm or more, 6 µm or more, or 10 µm or more, and from the perspective of reducing the thickness of the packaging material, the thickness of the multilayer polyethylene film 10 may be 200 µm or less, 120 µm or less, 100 µm or less, or 40 µm or less. From these perspective, the thickness of the multilayer polyethylene film 10 may be 3 µm to 200 µm, 5 µm to 120 µm, 6 µm to 100 µm, or 10 µm to 40 µm.

### (Front layer)

The front layer 11 is a layer constituted of a medium-density polyethylene resin of 0.926 g/cm³ or more or of a high-density polyethylene resin. If the front layer 11 is constituted of a medium-density polyethylene resin of 0.926 g/cm³ or more or of a high-density polyethylene resin, the multilayer polyethylene film 10 will have excellent heat resistance. In the present specification, the high-density polyethylene resin refers to a polyethylene resin having a density of 0.942 g/cm³ or more. Hereinafter, the polyethylene resin constituting the front layer 11 may also be referred to as first polyethylene resin.

From the perspective of achieving monomaterialization and excellent recycleability, the content of the first polyethylene resin in the front layer 11 may be 90 mass% or more, 95 mass% or more, or 98 mass% or more, and may be 100 mass% (mode in which the front layer 11 is substantially constituted of the first polyethylene resin) relative to the total mass of the front layer 11. If the front layer 11 is constituted of multiple polyethylene resins (e.g., multiple polyethylene resins having different average molecular weights, densities, etc.), a mixture of the multiple polyethylene resins is taken to be the first polyethylene resin.

From the perspective of further reducing occurrence of wrinkling, achieving even better processing stability, more easily maintaining gas barrier properties even after heat sterilization treatment, and achieving even better heat resistance, the front layer 11 may be constituted of a first polyethylene resin having a density in the following range. The density of the first polyethylene resin may be 0.930 g/cm³ or more, 0.935 g/cm³ or more, or 0.940 g/cm³ or more. The density of the first polyethylene resin may be 0.970 g/cm³ or less, 0.965 g/cm³ or less, or 0.960 g/cm³ or less. In particular, the density of the first polyethylene resin being 0.960 g/cm³ or less can suppress surface roughness of the multilayer polyethylene film 10 and generation of resin powder, and thus excellent gas barrier properties can be easily achieved. From these perspectives, the density of the first polyethylene resin may be 0.930 to 0.970 g/cm³, 0.935 to 0.965 g/cm³, or 0.940 to 0.960 g/cm³.

A melt flow rate MFR₁ of the first polyethylene resin at 190°C under a load of 2.16 kg is not specifically limited, but can be appropriately adjusted depending on the method of producing the first polyethylene resin. From the perspective of further reducing occurrence of wrinkling, achieving even better processing stability, more easily maintaining gas barrier properties even after heat sterilization treatment, and achieving even better heat resistance, the melt flow rate MFR₁ of the first polyethylene resin at 190°C under a load of 2.16 kg may be 5 g/10 min or less, 3 g/10 min or less, or 1.5 g/10 min or less. From the perspective of further reducing occurrence of wrinkling, achieving even better processing stability, more easily maintaining gas barrier properties even after heat sterilization treatment, and achieving even better heat resistance, MFR₁ of the first polyethylene resin may be 0.1 g/10 min or more, or 0.3 g/10 min or more. From these perspectives, MFR₁ of the first polyethylene resin may be 0.1 to 5 g/10 min, 0.1 to 3 g/10 min, 0.1 to 1.5 g/10 min, or 0.3 to 5 g/10 min. In the present specification, the melt flow rate refers to a value measured according to JIS K 6921-2.

From the perspective of further reducing occurrence of wrinkling, achieving even better processing stability, more easily maintaining gas barrier properties even after heat sterilization treatment, and achieving even better heat resistance, the probe descent temperature of the front layer 11 may be 120°C or more, 125°C or more, 130°C or more, or 133°C or more. From the perspective of further reducing occurrence of wrinkling and achieving even better processing stability, the probe descent temperature of the front layer 11 may be 160°C or less, 155°C or less, 150°C or less, or 146°C or less. The probe descent temperature of the front layer 11 being 150°C or less can suppress surface roughness of the multilayer polyethylene film 10 and generation of resin powder, and thus excellent gas barrier properties can be easily achieved. From these perspectives, the probe descent temperature of the front layer 11 may be 120 to 160°C, 125 to 155°C, 130 to 150°C, or 133 to 146°C.

The probe descent temperature is a parameter related to the local thermal analysis of a material using a probe, and is obtained by measuring the rising and falling behavior of the probe. The probe descent temperature is measured using an atomic force microscope (AFM) equipped with a cantilever (probe) having a heating mechanism and a nano-thermal microscope. When the cantilever is brought into contact with the surface of a solid specimen fixed to the specimen stage and heated by applying a voltage to the cantilever in contact mode, the specimen surface thermally expands and the cantilever rises. When the cantilever is further heated, the specimen surface softens and the hardness changes significantly. As a result, the cantilever falls and sinks into the specimen surface. The start point of the sudden displacement detected then is a probe descent start point, and by converting the voltage into temperature, a probe descent temperature can be obtained. Using this method, a local and near-surface probe descent temperature in a nanoscale region can be detected.

Examples of the AFM that can be used include the MPF-3D-SA and Ztherm systems manufactured by Oxford Instruments, and the Nano Thermal Analysis series and nano IR series manufactured by Bruker Japan. Measurements can be made even with AFMs from other manufacturers if Nano Thermal Analysis is installed. The cantilever may be, for example, the AN2-200 manufactured by Anasys Instruments. Any cantilever other than the cantilevers exemplified above can be used as long as it can sufficiently reflect laser light and can apply a voltage.

The temperature range for measuring the probe descent temperature varies depending on the material to be measured but, for example, the starting temperature can be the room temperature of around 25°C, and the ending temperature can be around 400°C. In the present specification, the temperature range for measuring the probe descent temperature can be 25°C or higher and 300°C or lower.

The spring constant of the cantilever may be 0.1 to 3.5 N/m, and may preferably be 0.5 to 3.5 N/m in order to perform measurements in both tapping and contact modes. In an AFM, the deflection of the cantilever may be detected in units of voltage. In contact mode, the deflection of the cantilever changes before and after contact between the cantilever and the specimen. By keeping this change within the range of 0.1 to 3.0 V, the cantilever can be kept in contact with the specimen while suppressing damage to the specimen surface.

The temperature rise rate of the cantilever varies depending on the heating mechanism, etc., but may be 0.1 to 10 V/sec, and preferably 0.2 to 5 V/sec. When the specimen surface softens, the tip of the cantilever sinks into the specimen and descends. The amount of descent of the cantilever affects the detection sensitivity of the peak top of the softening curve, and can be set to 3 to 500 nm. From the perspective of preventing damage to the cantilever, it is more preferable that the amount of descent is set to 5 to 100 nm.

In order to calculate a probe descent temperature, a calibration curve is required to be prepared. In an embodiment described later, a calibration curve is prepared using polycaprolactone, low-density polyethylene, polypropylene, and polyethylene terephthalate as calibration samples. Details of preparing the calibration curve will be described later. The materials of the calibration samples are not limited to the above, but it is sufficient to use at least one material having a melting point of around 60°C, one material having a melting point of around 250°C, and one material having a melting point between these two, whose thermal conductivities are not significantly different from that of general polymers. For example, only three materials, i.e., polycaprolactone, low-density polyethylene, and polyethylene terephthalate, excepting polyethylene from the above four calibration samples, may be used as calibration samples.

In order to measure the accurate temperature of a specimen, a calibration curve is prepared after measuring the specimen. Four types of calibration samples are used, which are polycaprolactone (melting point: 55°C), low-density polyethylene (LDPE, melting point: 110°C), polypropylene (PP, melting point: 164°C), and polyethylene terephthalate (PET, melting point: 235°C). The calibration samples are each measured twice at different measurement positions, and the average thereof is used as a probe descent temperature for preparing a calibration curve. Using the calibration curve, the voltage that is taken as a probe descent start point is converted into a temperature for use as a probe descent temperature.

The thickness of the front layer 11 is not specifically limited, but can be appropriately determined depending on cost or applications while taking account of the suitability derived from the production methods or equipment, and the lamination suitability to other layers. From the perspective of practicality, the thickness of the front layer 11 may be 1 µm or more, 2 µm or more, 3 µm or more, 4 µm or more, or 5 µm or more, and from the perspective of making the packaging material thinner, the thickness may be 50 µm or less, 30 µm or less, 20 µm or less, or 10 µm or less. From these perspectives, the thickness of the front layer 11 may be 1 µm to 50 µm, 2 µm to 30 µm, 3 µm to 20 µm, 4 µm to 10 µm, or 5 µm to 50 µm.

### (Intermediate layer)

The intermediate layer 12 is a layer containing a polyethylene resin. Hereinafter, the polyethylene resin constituting the intermediate layer 12 may also be referred to as second polyethylene resin. From the perspective of achieving monomaterialization and excellent recycleability, the content of the second polyethylene resin in the intermediate layer 12 may be 90 mass% or more, 95 mass% or more, or 98 mass% or more, and may be 100 mass% (mode in which the intermediate layer 12 is substantially constituted of the second polyethylene resin) relative to the total mass of the intermediate layer 12. If the intermediate layer 12 is constituted of multiple polyethylene resins (e.g., multiple polyethylene resins having different average molecular weights, densities, etc.), a mixture of the multiple polyethylene resins is taken to be the second polyethylene resin.

From the perspective of further reducing occurrence of wrinkling, achieving even better processing stability, more easily maintaining gas barrier properties even after heat sterilization treatment, and achieving even better heat resistance, the intermediate layer 12 may be constituted of a second polyethylene resin having a density in the following range. The density of the second polyethylene resin may be 0.940 g/cm³ or more, 0.945 g/cm³ or more, or 0.950 g/cm³ or more. The density of the second polyethylene resin may be 0.980 g/cm³ or less, 0.975 g/cm³ or less, 0.970 g/cm³ or less, or 0.965 g/cm³ or less. From these perspectives, the density of the second polyethylene resin may be 0.940 to 0.980 g/cm³, 0.940 to 0.975 g/cm³, 0.945 to 0.970 g/cm³, or 0.950 to 0.965 g/cm³.

A melt flow rate MFR₂ of the second polyethylene resin at 190°C under a load of 2.16 kg is not specifically limited, but can be appropriately adjusted depending on the method of producing the second polyethylene resin. From the perspective of further reducing occurrence of wrinkling, achieving even better processing stability, more easily maintaining gas barrier properties even after heat sterilization treatment, and achieving even better heat resistance, the melt flow rate MFR₂ of the second polyethylene resin at 190°C under a load of 2.16 kg may be 5 g/10 min or less, 3 g/10 min or less, 2 g/10 min or less, or 1.5 g/10 min or less. From the perspective of further reducing occurrence of wrinkling, achieving even better processing stability, more easily maintaining gas barrier properties even after heat sterilization treatment, and achieving even better heat resistance, MFR₂ of the second polyethylene resin may be 0.1 g/10 min or more, 0.5 g/10 min or more, or 0.8 g/10 min or more. From these perspectives, MFR₂ of the second polyethylene resin may be 0.1 to 5 g/10 min, 0.1 to 3 g/10 min, 0.5 to 2 g/10 min, or 0.5 to 1.5 g/10 min.

As the probe descent temperature of the intermediate layer 12 increases, excellent heat resistance can be more easily achieved. From the perspective of further reducing occurrence of wrinkling, achieving even better processing stability, more easily maintaining gas barrier properties even after heat sterilization treatment, and achieving even better heat resistance, the probe descent temperature of the intermediate layer 12 may be 125°C or more, 130°C or more, 135°C or more, 138°C or more, 140°C or more, or 142°C or more. From the perspective of further reducing occurrence of wrinkling and achieving even better processing stability, the probe descent temperature of the intermediate layer 12 may be 170°C or less, 165°C or less, 160°C or less, 157°C or less, or 155°C or less. From these perspectives, the probe descent temperature of the intermediate layer 12 may be 125 to 170°C, 135 to 165°C, 140 to 157°C, or 142 to 155°C.

The probe descent temperature of the intermediate layer 12 is higher than that of the front layer 11 and is equal to or higher than that of the rear layer 13. If the probe descent temperature of the intermediate layer 12 is higher than that of the front layer 11 and is equal to or higher than that of the rear layer 13, occurrence of wrinkling may be further reduced, processing stability may be further improved, and excellent heat resistance for maintaining gas barrier properties even after heat sterilization treatment may be achieved.

From the perspective of further reducing occurrence of wrinkling, achieving even better processing stability, more easily maintaining gas barrier properties even after heat sterilization treatment, and achieving even better heat resistance, the difference in probe descent temperature between the intermediate layer 12 and the front layer 11 and/or the rear layer 13 may be 3°C or more, 5°C or more, or 8°C or more. From the perspective of further reducing occurrence of wrinkling and achieving even better processing stability, the difference in probe descent temperature between the intermediate layer 12 and the front layer 11 and/or the rear layer 13 may be 20°C or less, 15°C or less, or 13°C or less. From these perspectives, the difference in probe descent temperature between the intermediate layer 12 and the front layer 11 and/or the rear layer 13 may be 3 to 20°C, 5 to 15°C, or 8 to 13°C.

The thickness of the intermediate layer 12 is not specifically limited, but can be appropriately determined depending on cost or applications while taking account of the suitability derived from the production methods or equipment, or the lamination suitability to other layers. From the perspective of practicality, the thickness of the intermediate layer 12 may be 5 µm or more, 8 µm or more, 10 µm or more, 12 µm or more, or 15 µm or more, and from the perspective of making the packaging material thinner, the thickness may be 80 µm or less, 50 µm or less, 40 µm or less, or 30 µm or less. From these perspectives, the thickness of the intermediate layer 12 may be 5 µm to 80 µm, 8 µm to 50 µm, 10 µm to 40 µm, 12 µm to 30 µm, or 15 µm to 80 µm.

As the thickness of the intermediate layer 12 increases, even better heat resistance can be achieved. From the perspective of more easily maintaining gas barrier properties even after heat sterilization treatment, and achieving even better heat resistance, the thickness of the intermediate layer 12 may be 30% or more, 33% or more, 40% or more, 50% or more, 55% or more, or 60% or more of the thickness of the multilayer polyethylene film 10. From the perspective of further reducing occurrence of wrinkling, and achieving even better processing stability, the thickness of the intermediate layer 12 may be 80% or less, 77% or less, or 75% or less of the thickness of the multilayer polyethylene film 10. From these perspectives, the thickness of the intermediate layer 12 may be 30 to 80%, 33 to 80%, 40 to 77%, 50 to 77%, 55 to 75%, or 60 to 75% of the thickness of the multilayer polyethylene film 10.

From the perspective of more easily maintaining gas barrier properties even after heat sterilization treatment, and achieving even better heat resistance, the thickness of the intermediate layer 12 may be greater than that of the front layer 11 and/or the rear layer 13. From the perspective of more easily maintaining gas barrier properties even after heat sterilization treatment, and achieving even better heat resistance, the thickness of the intermediate layer 12 may be 1 or more times, 1.5 or more times, 2 or more times, 2.5 or more times, or 3 or more times the thickness of the front layer 11 and/or the back layer 13. From the perspective of further reducing occurrence of wrinkling and achieving even better processing stability, the thickness of the intermediate layer 12 may be 8 times or less, 7 times or less, 6.5 times or less, or 6 times or less the thickness of the front layer 11 and/or the rear layer 13. From these perspectives, the thickness of the intermediate layer 12 may be 1 to 8 times, 1 to 6 times, 1.5 to 7 times, 2 to 6.5 times, or 2.5 to 6 times the thickness of the front layer 11 and/or the rear layer 13.

### (Rear layer)

The rear layer 13 is a layer containing a polyethylene resin. Hereinafter, the polyethylene resin constituting the rear layer 13 may also be referred to as third polyethylene resin. From the perspective of achieving monomaterialization and excellent recycleability, the content of the third polyethylene resin in the rear layer 13 may be 90 mass% or more, 95 mass% or more, or 98 mass% or more, and may be 100 mass% (mode in which the rear layer 13 is substantially constituted of the third polyethylene resin) relative to the total mass of the rear layer 13. If the rear layer 13 is constituted of multiple polyethylene resins (e.g., multiple polyethylene resins having different average molecular weights, densities, etc.), a mixture of the multiple polyethylene resins is taken to be the third polyethylene resin.

From the perspective of further reducing occurrence of wrinkling, achieving even better processing stability, more easily maintaining gas barrier properties and adhesion even after heat sterilization treatment, and achieving even better heat resistance, the rear layer 13 may be constituted of a third polyethylene resin having a density in the following range. The density of the third polyethylene resin may be 0.920 g/cm³ or more, 0.926 g/cm³ or more, 0.930 g/cm³ or more, 0.935 g/cm³ or more, or 0.940 g/cm³ or more. The density of the third polyethylene resin may be 0.970 g/cm³ or less, 0.965 g/cm³ or less, or 0.960 g/cm³ or less. The density of the third polyethylene resin being 0.960 g/cm³ or less can suppress surface roughness of the multilayer polyethylene film 10 and generation of resin powder. By suppressing generation of resin powder, adhesion of resin powder to the front layer 11-side surface of the multilayer polyethylene film 10 can be suppressed when the multilayer polyethylene film 10 is taken up in a roll, and excellent gas barrier properties can be easily achieved. From these perspectives, the density of the third polyethylene resin may be 0.920 to 0.970 g/cm³, 0.926 to 0.970 g/cm³, 0.930 to 0.965 g/cm³, 0.935 to 0.965 g/cm³, or 0.940 to 0.960 g/cm³.

A melt flow rate MFR₃ of the third polyethylene resin at 190°C under a load of 2.16 kg is not specifically limited, but can be appropriately adjusted depending on the method of producing the third polyethylene resin. From the perspective of further reducing occurrence of wrinkling, achieving even better processing stability, more easily maintaining gas barrier properties even after heat sterilization treatment, and achieving even better heat resistance, the melt flow rate MFR₃ of the third polyethylene resin at 190°C under a load of 2.16 kg may be 5 g/10 min or less, 3 g/10 min or less, or 1.5 g/10 min or less. From the perspective of further reducing occurrence of wrinkling, achieving even better processing stability, more easily maintaining gas barrier properties even after heat sterilization treatment, and achieving even better heat resistance, MFR₃ of the third polyethylene resin may be 0.1 g/10 min or more, or 0.3 g/10 min or more. From these perspectives, MFR₃ of the third polyethylene resin may be 0.1 to 5 g/10 min, 0.1 to 3 g/10 min, or 0.3 to 1.5 g/10 min.

From the perspective of further reducing occurrence of wrinkling, achieving even better processing stability, more easily maintaining gas barrier properties and adhesion even after heat sterilization treatment, and achieving even better heat resistance, the probe descent temperature of the rear layer 13 may be 120°C or more, 125°C or more, 130°C or more, or 133°C or more. From the perspective of further reducing occurrence of wrinkling and achieving even better processing stability, the probe descent temperature of the rear layer 13 may be 160°C or less, 155°C or less, 150°C or less, or 146°C or less. The probe descent temperature of the rear layer 13 being 160°C or less can suppress surface roughness of the multilayer polyethylene film 10 and generation of resin powder. By suppressing generation of resin powder, adhesion of resin powder to the front layer 11-side surface of the multilayer polyethylene film 10 can be suppressed when the multilayer polyethylene film 10 is taken up in a roll, and excellent gas barrier properties can be easily achieved. From these perspectives, the probe descent temperature of the rear layer 13 may be 120 to 160°C, 125 to 155°C, 130 to 150°C, or 133 to 146°C.

The thickness of the rear layer 13 is not specifically limited, but can be appropriately determined depending on cost or applications while taking account of the suitability derived from the production methods or equipment, or the lamination suitability to other layers. From the perspective of practicality, the thickness of the rear layer 13 may be 1 µm or more, 2 µm or more, 3 µm or more, 4 µm or more, or 5 µm or more, and from the perspective of making the packaging material thinner, the thickness may be 50 µm or less, 30 µm or less, 20 µm or less, or 10 µm or less. From these perspectives, the thickness of the rear layer 13 may be 1 µm to 50 µm, 2 µm to 30 µm, 3 µm to 20 µm, 4 µm to 10 µm, or 5 µm to 50 µm.

The rear layer 13 may be constituted similarly to the front layer 11. In other words, the multilayer polyethylene film 10 may have a symmetrical structure with respect to the intermediate layer 12. If the multilayer polyethylene film 10 has a symmetrical structure, curling can be suppressed when producing the multilayer polyethylene film 10, thereby achieving stable production of the multilayer polyethylene film 10.

The front layer 11, the intermediate layer 12, and the rear layer 13 may appropriately contain a resin other than the polyethylene resin as long as recyclability is not impaired. Examples of such a resin include an ethylene-vinyl acetate copolymer (EVA), ethylene-α-olefin copolymer, ethylene-(meth)acrylic acid copolymer, homopolypropylene resin (PP), propylene-ethylene random copolymer, propylene-ethylene block copolymer, propylene-α-olefin copolymer, olefin-based resins such as polybutene, polyamide, polyethylene vinyl alcohol, polyester, various modifying resins. These layers may independently contain one or more additives. Examples of the additives include crosslinking agents, antioxidants, antiblocking agents, lubricants (slip agents), UV absorbers, light stabilizers, fillers, reinforcing agents, antistatic agents, and pigments.

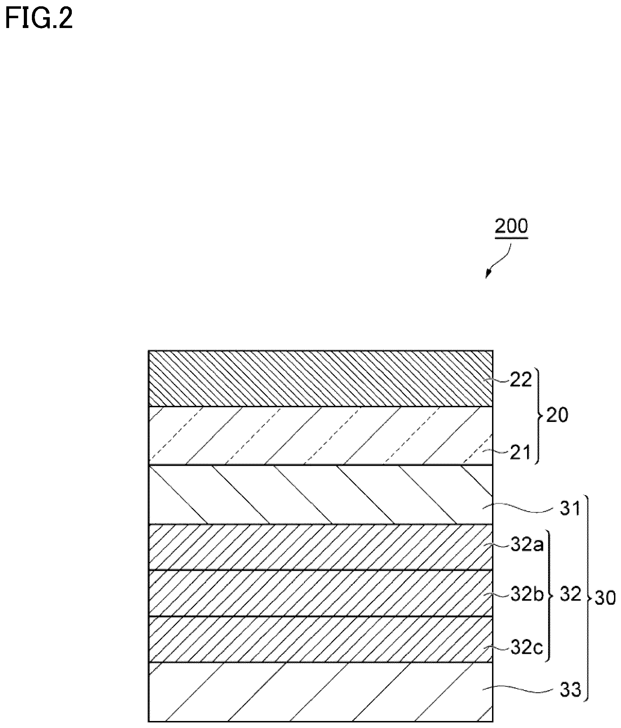

The intermediate layer 12 may be formed of a single layer or multiple layers. For example, as shown in Fig. 2, a multilayer polyethylene film 30 in a gas barrier film 200 may include a front layer 31, an intermediate layer 32, and a rear layer 33, and the intermediate layer 32 may include resin layers 32a, 32b and 32c. In this case, the resin layers 32a, 32b and 32c may all have the same composition. The fact that the intermediate layer 32 has multiple layers can be confirmed by observing a cross section of the multilayer polyethylene film 30 with an optical microscope or electron microscope.

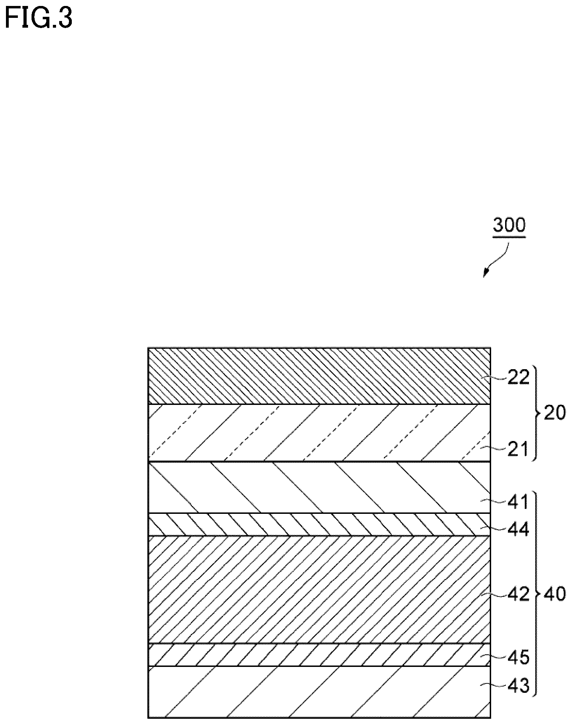

The multilayer polyethylene film 10 may include a layer other than the three layers of the front layer 11, intermediate layer 12, and rear layer 13. For example, as shown in Fig. 3, a multilayer polyethylene film 40 in a gas barrier film 300 may include a front layer 41, an intermediate layer 42, and a rear layer 43, and may include a resin layer 44 between the front layer 41 and the intermediate layer 42, and a resin layer 45 between the intermediate layer 42 and the rear layer 43. For example, the resin layer 44 may contain a polyethylene resin whose composition is different from those of the front layer 41 and the intermediate layer 42. For example, the resin layer 45 may contain a polyethylene resin whose composition is different from those of the intermediate layer 42 and the rear layer 43. For example, the multilayer polyethylene film may include three layers, five layers, seven layers, or more.

From the perspective of further reducing occurrence of wrinkling, achieving even better processing stability, more easily maintaining gas barrier properties even after heat sterilization treatment, and achieving even better heat resistance, each layer of the multilayer polyethylene film 10 may be constituted of a polyethylene resin having a density in the following range. The density of the polyethylene resin may be 0.930 g/cm³ or more, 0.940 g/cm³ or more, 0.945 g/cm³ or more, or 0.950 g/cm³ or more. The density of the polyethylene resin may be 0.980 g/cm³ or less, 0.975 g/cm³ or less, 0.970 g/cm³ or less, or 0.965 g/cm³ or less. From these perspectives, the density of the polyethylene resin may be 0.930 to 0.980 g/cm³, 0.940 to 0.975 g/cm³, 0.945 to 0.970 g/cm³, or 0.950 to 0.965 g/cm³.

The method of producing the multilayer polyethylene film 10 is not specifically limited, but may be any known method such as an air-cooled inflation method, water-cooled inflation method, or T-die casting method. From the perspective of versatility, the multilayer polyethylene film 10 may be produced using an inflation method, or an air-cooled inflation method. The air-cooled inflation method refers to a method in which a die with a circular lip called a ring die (or crosshead die) is installed at the tip of the extruder, and the material is extruded into a tubular shape and continuously molded. More specifically, the ring die is provided with an air hole at the center thereof, and compressed air is blown through the air hole to expand the tube, which is then cooled while being pulled by rollers called pinch rolls and taken up, thereby producing a multilayer polyethylene film 10.

The obtained multilayer polyethylene film 10 may undergo surface modification treatment as necessary to improve suitability for post-processing. For example, the surface of the multilayer polyethylene film 10 may undergo modification treatment to improve printing suitability or lamination suitability. The modification treatment may include treatments, such as corona discharge treatment, plasma treatment, and flame treatment, that generate functional groups by oxidizing the film surface, and wet process modification treatments that form an adhesion-enhancing layer by coating.

### <Gas barrier layer>

The gas barrier layer 20 is a layer provided on the multilayer polyethylene film 10 to improve gas barrier properties against water vapor or oxygen. The gas barrier layer 20 is preferably a layer having transparency. The gas barrier layer 20 includes an inorganic oxide layer 21 and a gas barrier coating layer 22. The gas barrier layer 20 may include both or either of the inorganic oxide layer 21 and the gas barrier coating layer 22.

### (Inorganic oxide layer)

The inorganic oxide layer 21 contains an inorganic oxide. Examples of the inorganic oxide include aluminum oxide, silicon oxide, tin oxide, magnesium oxide, and mixtures thereof. From the perspective of easily maintaining gas barrier properties and adhesion even after heat sterilization treatment, and achieving even better heat resistance, the inorganic oxide layer 21 may contain at least one selected from the group consisting of aluminum oxide, silicon oxide, and magnesium oxide.

The inorganic oxide layer 21 may have a thickness of 5 nm to 150 nm. If the thickness of the inorganic oxide layer 21 is 5 nm or more, a layer having a uniform and sufficient thickness can be easily formed and thus sufficient gas barrier properties can be achieved. If thickness of the inorganic oxide layer 21 is 150 nm or less, elasticity can be imparted to the inorganic oxide layer 21, and even when an external load such as bending or pulling is applied after formation of the inorganic oxide layer 21, occurrence of cracking in the inorganic oxide layer 21 can be suppressed. The thickness of the inorganic oxide layer 21 may be 6 nm or more, or 8 nm or more, and may be 100 nm or less, or 50 nm or less. From these perspectives, the thickness of the inorganic oxide layer 21 may be 6 nm to 100 nm, or 8 nm to 50 nm.

The inorganic oxide layer 21 can be formed using a generally-used vacuum deposition method. Alternatively, other thin film forming methods such as sputtering, ion plating, and plasma enhanced chemical vapor deposition (CVD) may be used. From the perspective of having higher productivity, the inorganic oxide layer 21 may be formed using a vacuum deposition method.

As a heating means used in the vacuum deposition method, any one of electron beam heating, resistive heating, and inductive heating can be used. The vacuum deposition method may be electron beam heating from the perspective of broad selectivity of evaporation materials. The inorganic oxide layer 21 may be deposited using a plasma-assisted method, ion beam-assisted method, etc. to improve adhesion between the multilayer polyethylene film 10 and the inorganic oxide layer 21 and improve density of the inorganic oxide layer 21. The inorganic oxide layer 21 may be deposited using reactive deposition to improve transparency thereof.

### (Gas barrier coating layer)

The gas barrier coating layer 22 is a layer provided for the purpose of protecting the multilayer polyethylene film 10 or the inorganic oxide layer 21 and complementing gas barrier properties. The gas barrier coating layer 22 may contain a water-soluble polymer and at least one selected from the group consisting of metal alkoxides, their hydrolysates, and reaction products thereof. The gas barrier coating layer 22 may contain at least one selected from the group consisting of silane coupling agents, their hydrolysates, and reaction products thereof.

Examples of the water-soluble polymer include polyvinyl alcohol, polyvinyl pyrrolidone, starch, methyl cellulose, carboxymethyl cellulose, and sodium alginate. From the perspective of having excellent gas barrier properties, the water-soluble polymer may be polyvinyl alcohol (PVA).

Examples of the metal alkoxide include compounds expressed by the following general formula.

M(OR¹¹)ₘ(R¹²)ₙ₋ₘ ··· (1)

In the above Formula (1), R¹¹ and R¹² each independently represent a monovalent organic group with 1 to 8 carbon atoms. R¹¹ and R¹² each may independently be an alkyl group such as a methyl group and an ethyl group. M represents an n-valent metal atom such as Si, Ti, Al or Zr. m represents an integer from 1 to n. If there are multiple R¹¹or R¹², these R¹¹or R¹² may be identical with or different from each other.

Examples of the metal alkoxide include tetraethoxysilane [Si(OC₂H₅)₄] and triisopropoxyaluminum [Al(O-2'-C₃H₇)₃]. The metal alkoxide may be tetraethoxysilane or triisopropoxyaluminum from the perspective of being relatively stable in aqueous solvents after being hydrolyzed.

Examples of the silane coupling agent include compounds expressed by the following general formula.

Si(OR²¹)ₚ(R²²)₃₋ₚR²³ ... (2)

In the above Formula (2), R²¹ represents an alkyl group such as a methyl group and an ethyl group, R²² represents an alkyl group substituted with an alkyl group, aralkyl group, aryl group, alkenyl group, or acryloxy group, or a monovalent organic group such as an alkyl group substituted with a methacryloxy group, R²³ represents a monovalent organic functional group, and p represents an integer from 1 to 3. If there are multiple R²¹or R²², these R²¹or R²² may be identical with or different from each other. Examples of the monovalent organic functional group represented by R²³ include a glycidyloxy group, epoxy group, mercapto group, hydroxyl group, amino group, halogen-substituted alkyl group, and monovalent organic functional group containing an isocyanate group. The silane coupling agent may be a polymer such as a dimer or trimer of the silane coupling agent mentioned above.

Examples of the silane coupling agent include vinyltrimethoxysilane, γ-chloropropylmethyldimethoxysilane, γ-chloropropyltrimethoxysilane, 3-glycidoxypropylmethyldimethoxysilane, 3-glycidoxypropyltrimethoxysilane, 3-glycidoxypropylmethyldiethoxysilane, 3-glycidoxypropylmethyltriethoxysilane, γ-methacryloxypropyltrimethoxysilane, and γ-methacryloxypropylmethyldimethoxysilane.

The gas barrier coating layer 22 can be formed by dissolving a water-soluble polymer in water or water/alcohol mixed solvent, mixing it with a metal alkoxide, silane coupling agent, or a hydrolysate thereof to obtain a mixed solution, and applying the mixed solution to the surface of the inorganic oxide layer 21 (the multilayer polyethylene film 10 if there is no inorganic oxide layer 21), followed by heating and drying. The mixed solution may contain additives such as an isocyanate compound, dispersant, stabilizer, viscosity adjuster, and colorant.

If the water-soluble polymer is PVA, the content of the PVA in the mixed solution may be 20 to 50 mass%, or 25 to 40 mass% relative to the total solid content of the mixed solution. If the content of the PVA is 20 mass% or more, formation of the gas barrier coating layer 22 becomes easy. If the content of the PVA is 50 mass% or less, excellent gas barrier properties can be achieved.

The gas barrier coating layer 22 may be a coating film containing a polyvalent metal salt of a polycarboxylic acid which is a reaction product of a carboxy group of a polycarboxylic acid polymer and a polyvalent metal compound (polyvalent metal salt coating film of a polycarboxylic acid). The polyvalent metal salt coating film of a polycarboxylic acid can be formed by applying a mixed solution of a polycarboxylic acid polymer and a polyvalent metal compound to the surface of the inorganic oxide layer 21 (the multilayer polyethylene film 10 if there is no inorganic oxide layer 21). Alternatively, the inorganic oxide layer 21 may be formed by forming a coating film by applying a coating liquid containing a polycarboxylic acid polymer as a main component to the surface of the inorganic oxide layer 21 (the multilayer polyethylene film 10 if there is no inorganic oxide layer 21), followed by drying, and then forming a coating film on the previously formed coating film by applying a coating liquid containing a polyvalent metal compound as a main component, followed by drying, and allowing a cross-linking reaction to occur between these coating films.

The polycarboxylic acid polymer refers to a polymer having two or more carboxyl groups in the molecule. Examples of the polycarboxylic acid polymer include ethylenically unsaturated carboxylic acid polymers; copolymers of an ethylenically unsaturated carboxylic acid and other ethylenically unsaturated monomers; and acid polysaccharides, such as alginic acid, carboxymethyl cellulose, and pectin having a carboxyl group in the molecule.

Examples of the ethylenically unsaturated carboxylic acid include acrylic acid, methacrylic acid, itaconic acid, maleic acid, fumaric acid, and crotonic acid. Examples of the ethylenically unsaturated monomer that can be copolymerized with the ethylenically unsaturated carboxylic acid include saturated carboxylic acid vinyl esters such as ethylene, propylene, and vinyl acetate, alkyl acrylates, alkyl methacrylates, alkyl itaconates, vinyl chloride, vinylidene chloride, styrene, acryl amide, and acrylonitrile. The polycarboxylic acid polymers may be used singly or in combination of two or more.

From the perspective of having excellent gas barrier properties, the ethylenically unsaturated carboxylic acid is preferably a polymer containing a constituent unit derived from at least one monomer selected from the group consisting of acrylic acid, maleic acid, methacrylic acid, itaconic acid, fumaric acid, and crotonic acid, and more preferably a polymer containing a constituent unit derived from at least one monomer selected from the group consisting of acrylic acid, maleic acid, methacrylic acid, and itaconic acid.

In the ethylenically unsaturated carboxylic acid polymer, the ratio of the constituent unit derived from at least one monomer selected from the group consisting of acrylic acid, maleic acid, methacrylic acid, and itaconic acid is preferably 80 mol% or more, and more preferably 90 mol% or more relative to the total mass of the monomers of the polymer.

The number average molecular weight of the polycarboxylic acid polymer is preferably 2,000 to 10,000,000, and more preferably 5,000 to 1,000,000. If the number average molecular weight is 2,000 or more, the gas barrier film may achieve sufficient water resistance and thus can suppress deterioration in gas barrier properties and transparency and occurrence of blushing due to moisture. If the number average molecular weight is 10,000,000 or less, viscosity of the coating liquid when forming the gas barrier coating layer 22 is prevented from becoming excessively high, and the coating film can be easily formed.

When forming a coating film of a coating liquid containing a polyvalent metal compound as a main component after forming a coating film by applying and drying a coating liquid containing a polycarboxylic acid polymer as a main component, part of the carboxyl group of the polycarboxylic acid polymer may be neutralized in advance with a basic compound. By neutralizing a part of the carboxyl group contained in the polycarboxylic acid polymer in advance, water resistance and heat resistance can be further improved. The basic compound may be at least one basic compound selected from the group consisting of polyvalent metal compounds, monovalent metal compounds, and ammonia. The polyvalent metal compounds include the compound exemplified later a polyvalent metal compound. The monovalent metal compounds include sodium hydroxide and potassium hydroxide.

The coating liquid containing a polycarboxylic acid polymer as a main component may contain additives such as a cross-linking agent, curing agent, leveling agent, antifoam agent, antiblocking agent, antistatic agent, dispersant, surfactant, softener, stabilizer, film former, and thickener.

The solvent used for the coating liquid containing a polycarboxylic acid polymer as a main component is preferably an aqueous medium. The aqueous medium may be water, an aqueous or hydrophilic organic solvent, or a mixture of these materials. Aqueous media contain water as a main component. The water content of the aqueous medium may be 70 mass% or more, or 80 mass% or more. Examples of the aqueous or hydrophilic organic solvent include alcohols such as methanol, ethanol, and isopropanol; ketones such as acetone and methyl ethyl ketone; ethers such as tetrahydrofuran; nitriles such as acetonitrile; cellosolves; and carbitols.

The polyvalent metal compound is not specifically limited as long as it reacts with a carboxyl group of a polycarboxylic acid polymer and forms a polyvalent metal salt of a polycarboxylic acid, and may include zinc oxide, magnesium oxide, magnesium methoxide, copper oxide, and calcium carbonate. From the perspective of having excellent gas barrier properties, the polyvalent metal compound may be zinc oxide. The polyvalent metal compounds may be used singly or in combination of two or more.

Zinc oxide is an inorganic material having UV absorption performance. If zinc oxide is in the form of particles, the average particle size of the zinc oxide may be 5 µm or less, 1 µm or less, or 0.1 µm or less, from the perspective of gas barrier properties, transparency, and coating film formability.

When forming a coating film by applying and drying a coating liquid containing a polyvalent metal compound as a main component, the coating liquid may contain solvents, resins soluble or dispersible in solvents, dispersants, softeners, stabilizers, film formers, thickeners, and the like in addition to the polyvalent metal compound (e.g., zinc oxide particles).

Examples the resins soluble or dispersible in solvents include an alkyd resin, melamine resin, acrylic resin, urethane resin, polyester resin, phenol resin, amino resin, fluororesin, epoxy resin, and isocyanate resin. If the coating liquid contain these resins, coatability and film formability may be improved.

As the dispersants, anionic surfactants and nonionic surfactants can be used. Examples of the surfactants include a (poly)carboxylic acid salt, alkyl sulfate ester salt, alkylbenzene sulfonic acid salt, alkylnaphthalene sulfonic acid salt, alkylsulfosuccinic acid salt, alkyl diphenyl ether disulfonic acid salt, alkyl phosphate salt, aromatic phosphate ester, polyoxyethylene alkyl ether, polyoxyethylene alkyl phenol ether, polyoxyethylene alkyl ester, alkylaryl sulfate ester salt, polyoxyethylene alkyl phosphate ester, sorbitan alkyl ester, glycerol fatty acid ester, sorbitan fatty acid ester, sucrose fatty acid ester, polyethylene glycol fatty acid ester, polyoxyethylene sorbitan alkyl ester, polyoxyethylene alkylaryl ether, polyoxyethylene derivative, polyoxyethylene sorbitol fatty acid ester, polyoxy fatty acid ester, and polyoxyethylene alkylamine. These surfactants may be used singly or in combination of two or more.

If the coating liquid containing a polyvalent metal compound as a main component contains additives, the mass ratio between the polyvalent metal compound and the additives (polyvalent metal compound : additive) may be 30:70 to 99:1, or 50:50 to 98:2.

Examples of the solvent used for the coating liquid containing a polyvalent metal compound as a main component include water, methyl alcohol, ethyl alcohol, isopropyl alcohol, n-propyl alcohol, n-butyl alcohol, n-pentyl alcohol, dimethyl sulfoxide, dimethylformamide, dimethylacetamide, toluene, hexane, heptane, cyclohexane, acetone, methyl ethyl ketone, diethyl ether, dioxane, tetrahydrofuran, ethyl acetate, and butyl acetate. From the perspective of coatability, the solvent may be at least one selected from the group consisting of methyl alcohol, ethyl alcohol, isopropyl alcohol, toluene, ethyl acetate, methyl ethyl ketone, and water, or from the perspective of film formability, the solvent may be at least one selected from the group consisting of methyl alcohol, ethyl alcohol, isopropyl alcohol, and water. These solvents may be used singly or in combination of two or more.

Examples of the method of applying the coating liquid include casting, dipping, roll coating, gravure coating, screen printing, reverse coating, spray coating, kit coating, die coating, metering bar coating, combined chamber doctor coating, and curtain coating.

The gas barrier coating layer 22 described above can maintain excellent gas barrier properties even after heat sterilization treatment. Therefore, if a laminate in which a sealant layer is provided to the gas barrier film 100 is used as a packaging material for heat sterilization treatment, the packaging material may exhibit excellent adhesion even after the heat sterilization treatment. The gas barrier coating layer 22 described above is preferable because it has sufficient transparency, bending resistance, and stretch resistance, and there is no risk of generating harmful substances such as dioxins.

From the perspective of achieving excellent gas barrier properties, the thickness of the gas barrier coating layer 22 may be 0.05 µm or more, or 0.1 µm or more. From the perspective of easily forming a uniform coating surface and reducing load due to drying, the thickness of the gas barrier coating layer 22 may be 1 µm or less, or 0.5 µm or less. From these perspectives, the thickness of the gas barrier coating layer 22 may be 0.05 µm to 1 µm, or 0.1 µm to 0.5 µm.

### (Undercoat layer (anchor coat layer))

From the perspective of improving adhesion between the multilayer polyethylene film 10 and the gas barrier layer 20, an undercoat layer (anchor coat layer, not shown) may be provided therebetween. By providing an undercoat layer (anchor coat layer), gas barrier properties and adhesion can be easily maintained even after heat sterilization treatment.

The undercoat layer (anchor coat layer) can be formed using a coating liquid containing a resin, examples of which include acrylic resins, epoxy resins, acrylic urethane-based resins, polyester polyurethane resins, and polyether polyurethane resins. From the perspective of heat resistance and interlayer adhesion strength, the undercoat layer (anchor coat layer) may be formed of a coating liquid containing an acrylic urethane resin or a polyester polyurethane resin.

The method for coating using the coating liquid for forming the undercoat layer (anchor coat layer) may be a known coating method such as an immersion method (dipping method), and methods using a sprayer, coater, printer, brush, or the like. The types of the coater and the printer used in these methods and the coating methods using them may include a gravure coater, reverse roll coater, micro gravure coater, combined chamber doctor coater, air knife coater, dip coater, bar coater, comma coater, and die coater used for a direct gravure method, reverse gravure method, kiss reverse gravure method, offset gravure method, and the like.

The method for drying the undercoat layer (anchor coat layer) may include a natural drying method, a method using an oven which is set to a predetermined temperature, and a method using a drying machine, such as an arch dryer, floating dryer, drum dryer, or infrared dryer, attached to a coater. Drying conditions can be appropriately selected according to the drying method. For example, if an oven is used, the layer may be dried at a temperature of 60 to 100°C for about 1 second to 2 minutes.

The undercoat layer (anchor coat layer) may have a thickness of 0.01 µm or more, 0.03 µm or more, or 0.05 µm or from the perspective of easily achieving sufficient adhesion between the layers. From the perspective of achieving excellent gas barrier properties, the thickness of the undercoat layer (anchor coat layer) may be 5 µm or less, 3 µm or less, or 2 µm or less. From these perspectives, the thickness of the undercoat layer (anchor coat layer) may be 0.01 µm to 5 µm, 0.03 µm to 3 µm, or 0.05 µm to 2 µm.

### <Laminate>

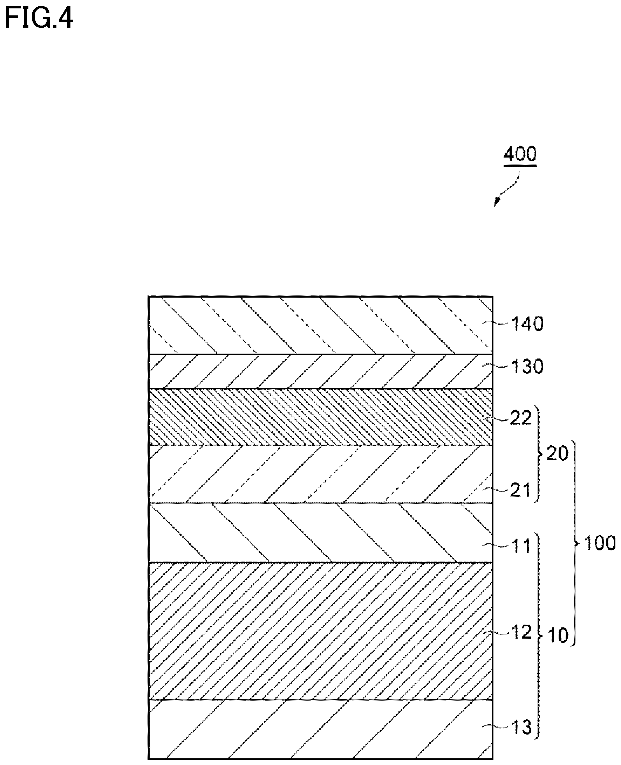

The gas barrier film 100 can be used as a material for constituting a laminate. Fig. 4 is a cross-sectional view illustrating a laminate according to an embodiment of the present invention. A laminate 400 includes a gas barrier film 100, an adhesive layer 130, and a sealant layer 140. The laminate 400 can also be said to include a multilayer polyethylene film 10, an inorganic oxide layer 21, a gas barrier coating layer 22, an adhesive layer 130, and a sealant layer 140. In other words, in another embodiment of the present invention, the laminate includes the gas barrier film described above, an adhesive layer disposed on the surface of the gas barrier layer facing away from the surface provided with the multilayer polyethylene film, and a sealant layer disposed via the adhesive layer.

From the perspective of achieving monomaterialization and excellent recycleability, the content of the polyethylene resin in the laminate 400 may be 90 mass% or more, or 95 mass% or more relative to the total mass of the laminate 400.

The thickness of the laminate 400 is not specifically limited but can be appropriately determined according to cost or application. The thickness of the laminate 400 may be 50 µm or more, 60 µm or more, or 70 µm or more, and may be 300 µm or less, 250 µm or less, or 200 µm or less. From these perspectives, the thickness of the laminate 400 may be 50 µm to 300 µm, 60 µm to 250 µm, or 70 µm to 200 µm.

### (Adhesive layer)

The adhesive layer 130 is a layer containing at least one adhesive, and is provided between the gas barrier layer 20 and the sealant layer 140 to adhere therebetween. The adhesive layer 130 can be formed using a known adhesive. For example, the adhesive may be a dry laminating adhesive. The dry laminating adhesive is not specifically limited, examples of which include ester adhesives, ether adhesives, and urethane adhesives. These adhesives may be of a one-part or two-part curing type.

From the perspective of having excellent gas barrier properties, the adhesive layer 130 may be formed using a gas barrier adhesive. In the occurrence of microcracks in the inorganic oxide layer 21 or the gas barrier coating layer 22, the gas barrier adhesive can penetrate into the cracks and fill in the gaps for reinforcement to suppress deterioration in gas barrier properties of the laminate 400.

The gas barrier adhesive can exhibit gas barrier properties after curing. The gas barrier adhesive may be an epoxy adhesive, polyester/polyurethane adhesive, or the like. A specific example of the gas barrier adhesive may be a MAXIVE manufactured by Mitsubishi Gas Chemical Company, Inc., a Paslim manufactured by DIC Corporation, or the like.

For example, the oxygen permeability of the gas barrier adhesive may preferably be 150 cc/(m²·day·atm) or less, more preferably 100 cc/(m²·day·atm) or less, even more preferably 80 cc/(m²·day·atm) or less, and most preferably 50 cc/(m²·day·atm) or less. If the oxygen permeability is in the above range, gas barrier properties of the laminate 400 can be sufficiently improved.

For example, the adhesive layer 130 can be formed by forming a coating film by applying an adhesive using bar coating, dipping, roll coating, gravure coating, reverse coating, air knife coating, comma coating, die coating, screen printing, spray coating, gravure offset printing, or the like, and then drying and curing the coating film. From the perspective of suppressing the occurrence cracking in the inorganic oxide layer 21, it is preferable that the adhesive layer 130 is directly formed on the surface of the inorganic oxide layer 21 or the gas barrier coating layer 22. That is, it is preferable that the adhesive layer 130 is formed by directly applying an adhesive to the surface of the inorganic oxide layer 21 or the gas barrier coating layer 22, followed by drying and curing.

The temperature for drying the coating may be, for example, 30 to 200°C, and preferably 50 to 180°C. The temperature for curing the coating may be, for example, 20 to 70°C, and preferably 30 to 60°C. If the drying and curing temperatures are in the above ranges, the occurrence of cracking in the inorganic oxide layer 21 and the adhesive layer 130 can be suppressed to sufficiently improve gas barrier properties of the laminate 400.

The adhesive layer 130 preferably has a thickness of 0.1 µm to 20 µm, more preferably 0.5 µm to 10 µm, and even more preferably 1 µm to 5 µm. If the thickness of the adhesive layer 130 is 0.1 µm or more, cushioning properties can be imparted to the layer to mitigate external impacts, and therefore cracking of the inorganic oxide layer 21 can be easily suppressed and gas barrier properties of the laminate 400 can be further improved. If the thickness of the adhesive layer is 20 µm or less, elasticity tends to be sufficiently retained in the laminate 400.

The thickness of the adhesive layer 130 is preferably 50 times or more the thickness of the inorganic oxide layer 21. If the thickness of the adhesive layer 130 is 50 times or more the thickness of the inorganic oxide layer 21, cushioning properties can be imparted to the layer to mitigate external impacts, and therefore cracking of the inorganic oxide layer 21 can be easily suppressed and gas barrier properties of the laminate 400 can be further improved. The thickness of the adhesive layer 130 is preferably 300 times or less the thickness of the inorganic oxide layer 21. If the thickness of the adhesive layer 130 is 300 times or less the thickness of the inorganic oxide layer 21, the laminate 400 can have excellent elasticity and processability, contributing to cost reduction. From these perspectives, the thickness of the adhesive layer 130 may be 50 to 300 times the thickness of the inorganic oxide layer 21.

### (Sealant layer)

The sealant layer 140 is a layer constituted of a polyethylene resin, for example. The sealant layer 140 is bonded by heat fusion (heat sealing) when forming a packaging material such as a packaging bag using the laminate 400. The polyethylene resin constituting the sealant layer 140 may be a Low-density polyethylene resin (LDPE), linear low-density polyethylene resin (LLDPE), or ultra-low-density polyethylene resin (VLDPE) from the perspective of having excellent heat sealability. From the perspective of environmental load, the sealant layer 140 may be constituted of a biomass-derived or recycled polyethylene resin. The sealant layer 140 may be constituted, for example, of an unstretched polyethylene film.

As the low-density polyethylene, a polyethylene having a density of 0.900 g/cm³ or more and less than 0.925 g/cm³ can be used. As the linear low-density polyethylene, a polyethylene having a density of 0.900 g/cm³ or more and less than 0.925 g/cm³ can be used. As the ultra-low-density polyethylene, a polyethylene having a density of less than 0.900 g/cm³ can be used.

The sealant layer 140 may contain a resin other than the polyethylene resin. Examples of the resin other than the polyethylene resin include an ethylene-vinyl acetate copolymer (EVA), ethylene-α-olefin copolymer, ethylene-(meth)acrylic acid copolymer, homopolypropylene resin (PP), propylene-ethylene random copolymer, propylene-ethylene block copolymer, propylene-α-olefin copolymer, and olefin-based resins such as polybutene. The sealant layer 140 may contain additives such as antioxidants, lubricants, antiblocking agents, and antistatic agents.

For example, the sealant layer 140 may have a thickness of 20 µm or more, 40 µm or more, or 50 µm or more. If the thickness of the sealant layer 140 is 20 µm or more, sufficient heat seal strength can be achieved. For example, the thickness of the sealant layer 140 may be 200 µm or less, 170 µm or less, or 150 µm or less. If the thickness of the sealant layer 140 is 200 µm or less, excellent processability can be achieved. From these perspectives, the thickness of the sealant layer 140 may be 20 µm to 200 µm, 40 µm to 170 µm, or 50 µm to 150 µm.

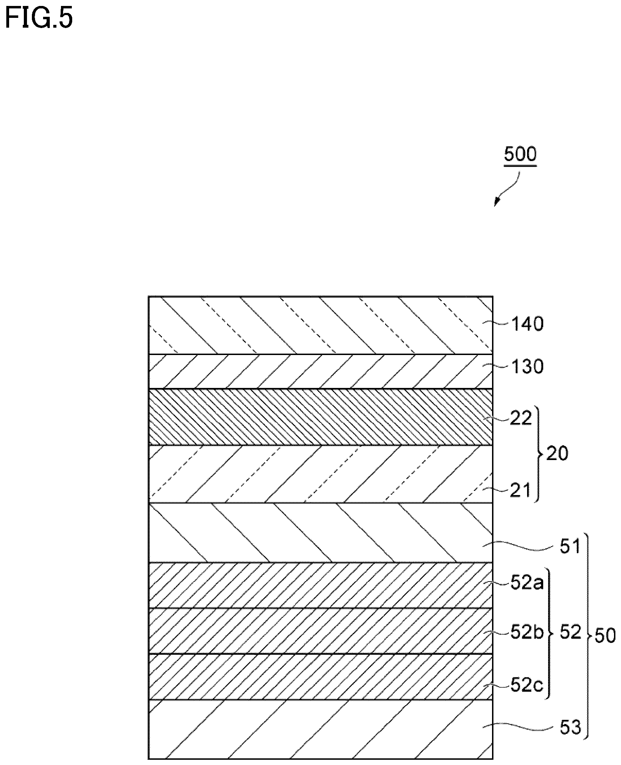

As shown in Fig. 5, if the intermediate layer is formed of multiple layers, a multilayer polyethylene film 50 in a laminate 500 may include a front layer 51, an intermediate layer 52, and a rear layer 53, and the intermediate layer 52 may include resin layers 52a, 52b and 52c. In this case, the resin layers 52a, 52b and 52c may be all made of the same composition. The fact that the intermediate layer 52 has multiple layers can be confirmed by observing a cross section of the multilayer polyethylene film 50 with an electron microscope or an optical microscope.

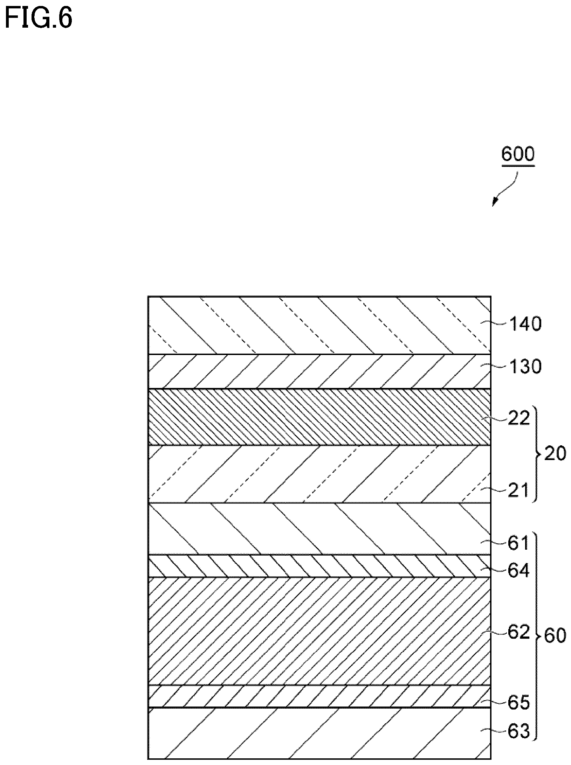

As shown in Fig. 6, if a multilayer polyethylene film includes layers other than the three layers, i.e., a front layer, an intermediate layer and a rear layer, a multilayer polyethylene film 60 in a laminate 600 may include a front layer 61, an intermediate layer 62, and a rear layer 63, and may also include a resin layer 64 between the front layer 61 and the intermediate layer 62, and a resin layer 65 between the intermediate layer 62 and the rear layer 63. For example, the resin layer 64 may contain a polyethylene resin whose composition is different from those of the front layer 61 and the intermediate layer 62. For example, the resin layer 65 may contain a polyethylene resin whose composition is different from those of the intermediate layer 62 and the rear layer 63. For example, the multilayer polyethylene film may include three layers, five layers, seven layers, or more.

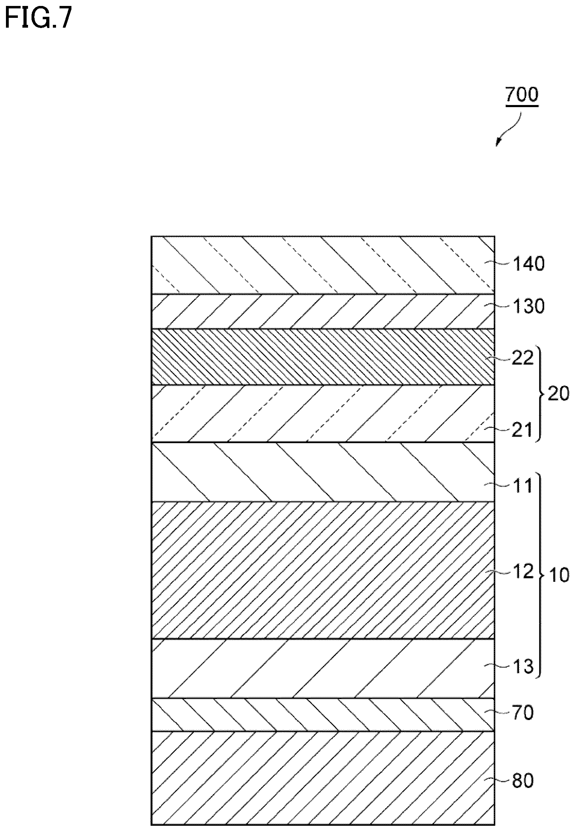

As shown in Fig. 7, a laminate 700 may include a second adhesive layer 70 on the surface of the multilayer polyethylene film 10 facing away from the sealant layer 140, and a substrate 80 disposed via the second adhesive layer 70.

### (Second adhesive layer)

The second adhesive layer 70 is a layer containing at least one adhesive and is provided between the multilayer polyethylene film 10 and the substrate 80 to adhere therebetween. The adhesive used for the second adhesive layer 70 may be a one-part curing type adhesive or may be a two-part curing type adhesive. The adhesive may be a urethane adhesive, epoxy adhesive, silicone adhesive, or the like. The second adhesive layer may be formed using the adhesive used for forming the adhesive layer 130 described above.

The second adhesive layer 70 may have a thickness of 0.5 µm or more, 0.8 µm or more, or 1 µm or more, and may have a thickness of 6 µm or less, 5 µm or less, or 4.5 µm or less. From these perspectives, the thickness of the second adhesive layer 70 may be 0.5 µm to 6 µm, 0.8 µm to 5 µm, or 1 µm to 4.5 µm.

### (Substrate)

The substrate 80 is an outermost layer of the laminate 700 and is provided for the purpose of protecting the laminate 700. For example, the substrate 80 may be a layer containing a polyethylene resin, that is, a polyethylene film. Other than the polyethylene resin, the substrate 80 may contain additives such as antioxidants, lubricants, antiblocking agents, and antistatic agents.

The difference in heat sealing temperature between the substrate 80 and the sealant layer 140 may be 10°C or more. If the difference in heat sealing temperature between the substrate 80 and the sealant layer 140 is 10°C or more, packaging bags can be easily formed when forming them using the laminate 700 as a packaging material.

For example, the substrate 80 may have a thickness of 10 µm or more, 20 µm or more, or 30 µm or more, and may have a thickness of 200 µm or less, 150 µm or less, or 100 µm or less. From these perspectives, the thickness of the substrate 80 may be 10 µm to 200 µm, 20 µm to 150 µm, or 30 µm to 100 µm.

The laminate 400 may further include a printed layer (not shown). The printed layer is placed at a position where it can be seen from outside the laminate 400, for the purpose of displaying information related to the contents, identifying the contents, or improving aesthetic factors of the packaging bag. For example, the printed layer may be provided on the surface of the inorganic oxide layer 21, the gas barrier coating layer 22, or the sealant layer 140 of the laminate 400.

The method of forming the printed layer is not specifically limited but may be formed applying a known printing method and a known printing ink. The printing method and the printing ink may be appropriately selected considering, for example, printing suitability for the layers of the laminate 400 and aesthetic factors such as color tone, as well as adhesion, safety as food containers, and other factors.

Examples of the printing method include gravure printing, offset printing, gravure offset printing, flexographic printing, and inkjet printing. Of these, gravure printing is preferable from the perspective of productivity or high definition of pictorial patterns.

From the perspective of enhancing adhesion of the printed layer, the surface of the layer, on which the printed layer is formed, may undergo pre-treatment such as corona treatment, plasma treatment, and frame processing, or may be provided with a coating layer such as an adhesion-enhancing layer.

### <Packaging material>

The gas barrier films 100, 200 and 300 and the laminates 400, 500, 600 and 700 can be used as packaging materials for forming packaging bags. Specifically, the gas barrier films 100, 200 and 300, with sealant layers provided thereto to form laminates, can be used as packaging materials such as flat pouches, three-sided pouches, fin seal pouches, gusseted pouches, standing pouches, pouches with spouts, and pouches with beaks.

The gas barrier films 100, 200 and 300 and the laminates 400, 500, 600 and 700 can be used as films such as for electronic devices, solar batteries, fuel cells, and substrates, other than packaging materials.

### Examples

Hereinafter, the present invention will be specifically described using examples. It should be noted that the present invention should not be construed as being limited to the following examples only.

### <Polyethylene resin>

Resin A: Density: 0.950 g/cm³, MFR: 1.1 g/10 min
Resin B: Density: 0.958 g/cm³, MFR: 1 g/10 min
Resin C: Density: 0.949 g/cm³, MFR: 0.3 g/10 min
Resin D: Density: 0.960 g/cm³, MFR: 1 g/10min
Resin E: Density: 0.944 g/cm³, MFR: 0.45 g/10min
Resin F: Density: 0.926 g/cm³, MFR: 0.85 g/10 min
Resin G: Density: 0.941 g/cm³, MFR: 1.3 g/10 min
Resin H: Density: 0.962 g/cm³, MFR: 0.85 g/10 min
Resin I: Density: 0.920 g/cm³, MFR: 0.85 g/10 min

### <Preparation of polyethylene film>

### (Examples 1 to 26A and Comparative Examples 1 to 10A)

The resins shown in Tables 1 to 6 as resins for forming a front layer, an intermediate layer, and a rear layer were charged into an extruder and melted and kneaded at 190°C, followed by introducing a polyethylene resin from a 3-layer die to prepare a multilayer polyethylene film, using an air-cooled inflation method. The thickness of the entire multilayer polyethylene film prepared in each of the examples and comparative examples was in the range of 25 µm to 40 µm. The contents of the polyethylene resin in the respective multilayer polyethylene films prepared in the examples and comparative examples were all 90 mass% or more.

### (Example 27A)

The resins shown in Table 6 as resins for forming Layers 1 to 5 were charged into an extruder and melted and kneaded at 190°C, followed by introducing a polyethylene resin from a 5-layer die to prepare a multilayer polyethylene film, in which Layers 1 and 2 formed a front layer, Layer 3 formed an intermediate layer, and Layers 4 and 5 formed a rear layer, using an air-cooled inflation method. The content of the polyethylene resin in the prepared multilayer polyethylene film was 90 mass% or more.

### (Example 28A)

The resins shown in Table 6 as resins for forming Layers 1 to 7 were charged into an extruder and melted and kneaded at 190°C, followed by introducing a polyethylene resin from a 7-layer die to prepare a multilayer polyethylene film, in which Layers 1 and 2 formed a front layer, Layers 3 to 5 formed an intermediate layer, and Layers 6 and 7 formed a rear layer, using an air-cooled inflation method. The content of the polyethylene resin in the prepared multilayer polyethylene film was 90 mass% or more.

### (Example 29A)

The resins shown in Table 6 as resins for forming Layers 1 to 7 were charged into an extruder and melted and kneaded at 190°C, followed by introducing a polyethylene resin from a 7-layer die to prepare a multilayer polyethylene film, in which Layer 1 formed a front layer, Layers 2 to 6 formed an intermediate layer, and Layer 7 formed a rear layer, using an air-cooled inflation method. The content of the polyethylene resin in the prepared multilayer polyethylene film was 90 mass% or more.

### (Example 30A)

The resins shown in Table 6 as resins for forming Layers 1 to 7 were charged into an extruder and melted and kneaded at 190°C, followed by introducing a polyethylene resin from a 7-layer die to prepare a multilayer polyethylene film, in which Layers 1 and 2 formed a front layer, Layers 3 to 5 formed an intermediate layer, and Layers 6 and 7 formed a rear layer, using an air-cooled inflation method. The content of the polyethylene resin in the prepared multilayer polyethylene film was 90 mass% or more.

### <Probe descent temperature>

Using an atomic force microscope equipped with a nano-thermal microscope constituted of a cantilever (probe) with a heating mechanism, probe descent temperatures (softening points) of the respective layers of the multilayer polyethylene film were measured. First, the multilayer polyethylene film was embedded in a visible light curing resin to obtain a measurement specimen. Next, in a -140°C environment, the measurement specimen was cross-sectioned in a direction parallel to the TD direction using a diamond knife of a cryo-ultramicrotome. After measuring the thicknesses of the respective layers from the cross section of the multilayer polyethylene film, probe descent temperatures of the multilayer polyethylene film were measured in a manner described below.

The atomic force microscope used was an MPF-3D-SA manufactured by Oxford Instruments, the nano-thermal microscope equipped in the atomic force microscope was a Ztherm manufactured by Oxford Instruments, and the cantilever used was an AN2-200 (product name) manufactured by Anasys Instruments. After measuring the shape of the specimen in a 10 µm field of view in AC mode, the cantilever was separated from the specimen by 5 µm to 10 µm in the Z direction (normal direction to the specimen surface). In this state, the detrend correction function of the device was performed in contact mode under conditions of a maximum applied voltage of 6 V and a heating rate of 0.5 V/s to correct changes in deflection of the cantilever due to the applied voltage. Then, in contact mode, the cantilever was brought into contact with the specimen so that the change in deflection before and after contact between the cantilever and the specimen was 0.2 V and, while maintaining deflection at the constant value, a voltage was applied to the cantilever under conditions of a maximum applied voltage of 6 V and a heating rate of 0.5 V/s to heat the specimen. The displacement of the cantilever in the Z direction in this case was recorded and, when the Z displacement changed from rising to falling and the descent was 50 nm from the point of change, the measurement was stopped. If the maximum applied voltage was reached without the 50 nm-descent from the point of change in the Z displacement, the maximum applied voltage was increased by 0.5 V to carry out detrend correction and measurement again. The applied voltage at which the recorded Z displacement was maximum was converted into a temperature. This measurement was carried out at 10 points within a 10 µm field of view, and the average of the 10 points was taken as a probe descent temperature. The probe descent temperatures of the individual layers of the multilayer polyethylene film are shown in Tables 1 to 6.

A calibration curve was used to convert the applied voltage to temperature. Polycaprolactone (melting point: 60°C), low-density polyethylene (melting point: 112°C), polypropylene (melting point: 166°C), and polyethylene terephthalate (melting point: 255°C) were measured as calibration samples to prepare a calibration curve of applied voltage and temperature. The melting peak temperature measured by a differential scanning calorimeter (DSC) under the temperature rise rate of 5°C/min was taken as a melting point. The measurement method for the calibration samples was the same as that used for measurement of each specimen; however, the maximum applied voltage during detrend correction and measurement was set to 3.5 V if the sample was polycaprolactone, 5.5 V if the sample was low-density polyethylene, 6.5 V if the sample was polypropylene, and 7.8 V if the sample was polyethylene terephthalate. The relationship between melting point and applied voltage at which the Z displacement was maximum when measuring each calibration sample was approximated by a cubic function using the least squares method to create a calibration curve.

### <Preparation of gas barrier film>

An undercoat layer, an inorganic oxide layer, and a gas barrier coating layer were formed on the front layer-side surface of the multilayer polyethylene film prepared in each of the examples and comparative examples so as to have the configuration shown in Tables 1 to 6 to prepare a gas barrier film in which the multilayer polyethylene film / undercoat layer / inorganic oxide layer / gas barrier coating layer were laminated in this order. The undercoat layer, the adhesive layer, the inorganic oxide layer, and the gas barrier coating layer were formed using the respective methods described later. The contents of the polyethylene resin in the gas barrier films prepared in the examples and comparative examples were all 90 mass% or more.

### <Undercoat layer>

An acrylic polyol (ACRYDIC CL-1000, manufactured by DIC Corporation) and an isocyanate compound (TDI type curing agent CORONATE 2030, manufactured by Tosoh Corporation) were mixed in a solids mass ratio of 6:4. Next, the mixture was diluted by adding ethyl acetate so that the solid content was 2 mass% to obtain an undercoat layer-forming coating liquid. The front layer-side surface of the multilayer polyethylene film of each of the examples and comparative examples was subjected to one-sided corona treatment, and then the undercoat layer-forming coating liquid was applied to the corona-treated surface using a gravure printer to form a coating film, followed by drying at 60°C for 10 seconds in an oven to thereby form an undercoat layer having a thickness of 0.1 µm.

### <Inorganic oxide layer>

If the inorganic oxide layer was silicon oxide, an electron beam heating-type vacuum deposition device was used to form a transparent inorganic oxide layer made of the silicon oxide and having a thickness of 30 nm.

If the inorganic oxide layer was aluminum oxide, an electron beam heating-type vacuum deposition device was used to form a transparent inorganic oxide layer made of the aluminum oxide and having a thickness of 15 nm.

### (Gas barrier coating layer)

### (Organic-inorganic composite film)

Aqueous solutions were prepared, which were: an aqueous solution in which a polyvinyl alcohol resin (PVA, Poval PVA-105 manufactured by Kuraray Co., Ltd., degree of saponification: 98-99%, degree of polymerization: 500) was dissolved; an aqueous solution obtained by hydrolyzing tetraethoxysilane (TEOS) with 0.02 mol/L hydrochloric acid; and an aqueous solution obtained by hydrolyzing γ-glycidoxypropyltrimethoxysilane (GPTMS, KBM-403 manufactured by Shin-Etsu Chemical Co., Ltd.) with 0.02 mol/L hydrochloric acid. Next, the three solutions were mixed at a mass ratio before performing hydrolysis so that the mass ratio of PVA, TEOS, and GPTMS was 40:50:10. Next, the mixed solution was diluted by adding isopropyl alcohol so that the mass ratio between water and isopropyl alcohol was 90:10 to obtain an organic-inorganic composite film-forming coating liquid (solid content: 5 mass%).

The organic-inorganic composite film-forming mixture described above was applied onto the inorganic oxide layer to form a coating film, followed by drying at 60°C for 10 seconds in an oven to thereby form a gas barrier coating layer formed of the organic-inorganic composite film and having a thickness of 0.3 µm.

### (Polyvalent metal salt coating film of polycarboxylic acid)

20 parts by mass of a polyacrylic acid solution (Aron A-10H manufactured by Toagosei Co., Ltd., number average molecular weight: 200,000, solid concentration: 25 mass%) was diluted by adding 58.9 parts by mass of distilled water. Next, 0.44 parts by mass of aminopropyltrimethoxysilane (APTMS, manufactured by Aldrich) was added and stirred to obtain uniform Coating Mixture A containing a polycarboxylic acid polymer as a main component.

100 parts by mass of water dispersion of zinc oxide fine particles (ZE143 manufactured by Sumitomo Osaka Cement Co., Ltd.) was mixed with 2 parts by mass of a curing agent (Liofol HAERTER UR 5889-21 manufactured by Henkel) to obtain Coating Mixture B containing a polyvalent metal compound as a main component.

The Coating Mixture A described above was applied onto the inorganic oxide layer using a gravure printer to form a coating film, followed by drying at 60°C for 10 seconds in an oven to thereby form Coating Film A having a thickness of 0.2 µm. Further, the Coating Mixture B was applied using a gravure printer to form a coating film which was then dried at 60°C for 10 seconds in an oven to thereby form a Coating Film B having a thickness of 0.2 µm. Thus, an oxygen barrier coating film formed of a polyvalent metal salt coating film of polycarboxylic acid was formed.

### <Adhesive layer>

### (Urethane adhesive)

A urethane adhesive was prepared by mixing 11 parts by mass of TAKENATE A52 (manufactured by Mitsui Chemicals, Inc.) and 84 parts by mass of ethyl acetate with 100 parts by mass of TAKELAC A525 (manufactured by Mitsui Chemicals, Inc.).

### (Gas barrier adhesive)

A gas barrier adhesive was obtained by mixing 16 parts by mass of MAXIVE C93T (manufactured by Mitsubishi Gas Chemical Company, Inc.) and 5 parts by mass of MAXIVE M-100 (manufactured by Mitsubishi Gas Chemical Company, Inc.) with 23 parts by mass of solvent in which ethyl acetate and methanol were mixed in a mass ratio of 1:1.

### [Evaluation]

### <Processing stability>

After forming a gas barrier coating layer (after forming an inorganic oxide layer for the examples and comparative examples in which no gas barrier coating layer was formed), the exterior of the gas barrier film was visually observed, and the processing stability was evaluated based on the following evaluation criteria. The evaluation results are shown in Tables 1 to 6.
A: No wrinkling was observed on the exterior of the gas barrier film.
B: Minor wrinkling was observed on the exterior of the gas barrier film.
C: Significant wrinkling was observed on the exterior of the gas barrier film.

### <Gas barrier properties>

The urethane adhesive described above or the gas barrier adhesive described above was dry-laminated on the gas barrier film prepared in each of the examples and comparative examples using a Multicoater TM-MC (manufactured by HIRANO TECSEED Co., Ltd.), followed by curing at 40°C for 3 days. After curing, LLDPE (polyethylene film, TUX MC-S manufactured by Mitsui Chemicals Tohcello Co., Ltd., thickness: 60 µm) was bonded to the adhesive layer to prepare a laminate in which the gas barrier film / adhesive / LLDPE were laminated in this order. Oxygen permeability (cm³/(m²·day·atm)) of each prepared laminate was measured in an atmosphere at 30°C and 70%RH using an oxygen permeability measuring device (product name: OXTRAN-2/20 manufactured by MOCON Inc.), and gas barrier properties were evaluated based on the following evaluation criteria. The evaluation results are shown in Tables 1 to 6.
A+: Oxygen permeability was less than 2 cm³/(m²·day·atm).
A: Oxygen permeability was 2 cm³/(m²·day·atm) or more and less than 5 cm³/(m²·day·atm).
A-: Oxygen permeability was 5 cm³/(m²·day·atm) or more and less than 10 cm³/(m²·day·atm).
B+: Oxygen permeability was 10 cm³/(m²·day·atm) or more and less than 20 cm³/(m²·day·atm).
B: Oxygen permeability was 20 cm³/(m²·day·atm) or more and less than 50 cm³/(m²·day·atm).
B-: Oxygen permeability was 50 cm³/(m²·day·atm) or more.

### <Gas barrier properties after boiling treatment>

Each laminate was cut into two pieces at 15 cm x 10 cm in size, and these two laminate pieces were overlapped with each other with their sealant layers facing each other, and then impulse-sealed on three sides to form a pouch. 150 mL of water, as contents, was charged into the pouch and the remaining one side was impulse-sealed to prepare a pouch (packaging bag) with four sides sealed. The prepared pouch was subjected to boiling treatment at 95°C for 30 minutes using a boiling treatment device. After the boiling treatment, the pouch was opened to remove the contents, sufficiently dried, and then oxygen permeability was measured using the method mentioned above to evaluate gas barrier properties. The evaluation results are shown in Tables 1 to 6.

### < Molecular orientation>

The molecular orientation of the molecular chains in the plane of the multilayer polyethylene film was measured by rotating the multilayer polyethylene film in a microwave polarized electric field, using a microwave molecular orientation meter (product name MOA-5012A manufactured by Oji Scientific Instruments). The absolute values of the molecular orientation of the multilayer polyethylene films prepared in the examples and comparative examples were all less than 1.07. Furthermore, the multilayer polyethylene films were stretched in the MD direction to measure the molecular orientation of the stretched multilayer polyethylene films, which resulted in the absolute values of the molecular orientation all being 1.30.

**[Table 1]**

| | | Ex. 1A | Ex. 2A | Ex, 3A | Ex, 4A | Ex. 5A | Ex. 6A | Ex. 7A | Ex. 8A | Ex. 9A | Ex. 10A | Ex. 11A | Ex. 12A |
|---|---|---|---|---|---|---|---|---|---|---|---|---|---|
| Resin | Front layer | Resin A | Resin A | Resin A | Resin A | Resin A | Resin A | Resin A | Resin A | Resin A | Resin A | Resin A | Resin A |
| | Interm. layer | Resin B | Resin B | Resin B | Resin B | Resin B | Resin B | Resin B | Resin B | Resin B | Resin B | Resin B | Resin B |
| | Rear layer | Resin A | Resin A | Resin A | Resin A | Resin A | Resin A | Resin A | Resin A | Resin A | Resin A | Resin A | Resin A |
| Density (g/cm³) | Front layer | 0.950 | 0.950 | 0.950 | 0.950 | 0.950 | 0.950 | 0.950 | 0.950 | 0.950 | 0.950 | 0.950 | 0.950 |
| | Interm. layer | 0.958 | 0.958 | 0.958 | 0.958 | 0.958 | 0.958 | 0.958 | 0.958 | 0.958 | 0.958 | 0.958 | 0.958 |
| | Rear layer | 0.950 | 0.950 | 0.950 | 0.950 | 0.950 | 0.950 | 0.950 | 0.950 | 0.950 | 0.950 | 0.950 | 0.950 |
| Density of multilayer polyethylene film (g/cm³) | | 0.955 | 0.953 | 0.954 | 0.956 | 0.955 | 0.955 | 0.955 | 0.955 | 0.955 | 0.955 | *0.955* | 0.955 |
| Thickness ratio | Front layer | 1 | 1 | 1 | 1 | 1 | 1 | 1 | 1 | 1 | 1 | 1 | 1 |
| | Interm. layer | 3 | 1 | 2 | 6 | 3 | 3 | 3 | 3 | 3 | 3 | 3 | 3 |
| | Rear layer | 1 | 1 | 1 | 1 | 1 | 1 | 1 | 1 | 1 | 1 | 1 | 1 |
| Thickness ratio of Interm. layer (%) | | 60 | 33 | 50 | 75 | 60 | 60 | 60 | 60 | 60 | 60 | 60 | 60 |
| Probe descent temp. (°C) | Front layer | 144 | 144 | 144 | 144 | 144 | 144 | 144 | 144 | 144 | 144 | 144 | 144 |
| | Interm. layer | 150 | 150 | 150 | 150 | 150 | 150 | 150 | 150 | 150 | 150 | 150 | 150 |
| | Rear layer | 144 | 144 | 144 | 144 | 144 | 144 | 144 | 144 | 144 | 144 | 144 | 144 |
| Undercoat layer | | Yes | Yes | Yes | Yes | No | Yes | Yes | Yes | Yes | Yes | Yes | Yes |
| Gas barrier layer | Inorganic oxide layer | Si oxide | Si oxide | Si oxide | Si oxide | Si oxide | Al oxide | Al oxide | None | None | Si oxide | Si oxide | Al oxide |
| | Gas barrier coating layer | O-I CF | O-I CF | O-I CF | O-I CF | O-I CF | O-I CF | PMSCF of PA | O-I CF | PMSCF of PA | O-I CF | None | None |
| Adhesive layer | | U-based | U-based | U-based | U-based | U-based | U-based | U-based | U-based | U-based | Gas barrier | Gas barrier | Gas barrier |
| Evaluation | Processing stability | A | A | A | A | A | A | A | A | A | A | A | A |
| | Oxygen barrier prop. | A+ | A+ | A+ | A+ | A+ | A | A+ | A- | A- | A+ | A+ | A |
| | Oxygen barrier prop. after boiling treatment | A | A- | A | A | A | A- | A+ | A- | A+ | A+ | A+ | A- |

| | | | | | | | | | | | | | |
|---|---|---|---|---|---|---|---|---|---|---|---|---|---|
| O-I CF: Organic-inorganic composite film PMSCF of PA: Polyvalent metal salt coating film of polycarboxylic acid U-based: Urethane-based | | | | | | | | | | | | | |

**[Table 2]**

| | | Ex. 13A | Ex. 14A | Ex, 15A | Ex, 16A | Ex. 17A | Ex. 18A | Ex. 19A |
|---|---|---|---|---|---|---|---|---|
| Resin | Front layer | Resin A | Resin A | Resin A | Resin A | Resin A | Resin A | Resin A |
| | Interm. layer | Resin C | Resin C | Resin C | Resin C | Resin C | Resin C | Resin C |
| | Rear layer | Resin A | Resin A | Resin A | Resin A | Resin A + Resin C (50:50) | Resin A + Resin C (50:50) | Resin A + Resin C (50:50) |
| Density (g/cm³) | Front layer | 0.950 | 0.950 | 0.950 | 0.950 | 0.950 | 0.950 | 0.950 |
| | Interm. layer | 0.963 | 0.963 | 0.963 | 0.963 | 0.963 | 0.963 | 0.963 |
| | Rear layer | 0.950 | 0.950 | 0.950 | 0.950 | 0.957 | 0.957 | 0.957 |
| Density of multilayer polyethylene film (g/cm³) | | 0.958 | 0.954 | 0.958 | 0.958 | 0.960 | 0.960 | 0.960 |
| Thickness ratio | Front layer | 1 | 1 | 1 | 1 | 1 | 1 | 1 |
| | Interm. layer | 3 | 1 | 3 | 3 | 4 | 4 | 4 |
| | Rear layer | 1 | 1 | 1 | 1 | 1 | 1 | 1 |
| Thickness ratio of Interm. layer (%) | | 60 | 33 | 60 | 60 | 67 | 67 | 67 |
| Probe descent temp. (°C) | Front layer | 144 | 144 | 144 | 144 | 144 | 144 | 144 |
| | Interm. layer | 155 | 155 | 155 | 155 | 155 | 155 | 155 |
| | Rear layer | 144 | 144 | 144 | 144 | 146 | 146 | 146 |
| Undercoat layer | | Yes | Yes | Yes | Yes | Yes | Yes | Yes |
| Gas barrier layer | Inorganic oxide layer | Si oxide | Si oxide | Si oxide | Si oxide | Si oxide | Al oxide | Al oxide |
| | Gas barrier coating layer | O-I CF | O-I CF | PMSCF of PA | None | O-I CF | PMSCF of PA | PMSCF of PA |
| Adhesive layer | | U-based | U-based | U-based | Gas barrier | U-based | U-based | U-based |
| Evaluation | Processing stability | A | A | A | A | A | A | A |
| | Oxygen barrier prop. | A+ | A+ | A+ | A+ | A+ | A+ | A- |
| | Oxygen barrier prop. after boiling treatment | A | A- | A+ | A+ | A | A+ | A+ |

| | | | | | | | | |
|---|---|---|---|---|---|---|---|---|
| O-I CF: Organic-inorganic composite film PMSCF of PA: Polyvalent metal salt coating film of polycarboxylic acid U-based: Urethane-based | | | | | | | | |

**[Table 3]**

| | | Ex. 20A | Ex. 21A | Ex, 22A | Ex, 23A | Ex. 24A | Ex. 25A | Ex. 26A |
|---|---|---|---|---|---|---|---|---|
| Resin | Front layer | Resin A | Resin A | Resin A | Resin E | Resin F | Resin G | Resin G + Resin I (80:20) |
| | Interm. layer | Resin D | Resin D | Resin D | Resin C | Resin G | Resin H | Resin G |
| | Rear layer | Resin D | Resin D | Resin D | Resin E | Resin F | Resin G | Resin G + Resin I (80:20) |
| Density (g/cm³) | Front layer | 0.950 | 0.950 | 0.950 | 0.944 | 0.926 | 0.941 | 0.937 |
| | Interm. layer | 0.960 | 0.960 | 0.960 | 0.963 | 0.941 | 0.962 | 0.941 |
| | Rear layer | 0.960 | 0.960 | 0.960 | 0.944 | 0.926 | 0.941 | 0.937 |
| Density of multilayer polyethylene film (g/cm³) | | 0.958 | 0.958 | 0.958 | 0.955 | 0.935 | 0.954 | 0.939 |
| Thickness ratio | Front layer | 1 | 1 | 1 | 1 | 1 | 1 | 1 |
| | Interm. layer | 3 | 3 | 3 | 3 | 3 | 3 | 3 |
| | Rear layer | 1 | 1 | 1 | 1 | 1 | 1 | 1 |
| Thickness ratio of Interm. layer (%) | | 60 | 60 | 60 | 60 | 60 | 60 | 60 |
| Probe descent temp. (°C) | Front layer | 144 | 144 | 144 | 146 | 133 | 142 | 139 |
| | Interm. layer | 155 | 155 | 155 | 155 | 142 | 152 | 142 |
| | Rear layer | 155 | 155 | 155 | 146 | 133 | 142 | 139 |
| Undercoat layer | | Yes | Yes | Yes | Yes | Yes | Yes | Yes |
| Gas barrier layer | Inorganic oxide layer | Si oxide | Si oxide | Si oxide | Si oxide | Si oxide | Si oxide | Si oxide |
| | Gas barrier coating layer | O-I CF | None | None | O-I CF | O-I CF | O-I CF | O-I CF |
| Adhesive layer | | U-based | U-based | Gas barrier | U-based | U-based | U-based | U-based |
| Evaluation | Processing stability | A | A | A | A | A | A | A |
| | Oxygen barrier prop. | A | A | A+ | A+ | A | A+ | A+ |
| | Oxygen barrier prop. after boiling treatment | A- | A- | A | A | A- | A | A |

| | | | | | | | | |
|---|---|---|---|---|---|---|---|---|
| O-I CF: Organic-inorganic composite film PMSCF of PA: Polyvalent metal salt coating film of polycarboxylic acid U-based: Urethane-based | | | | | | | | |

**[Table 4]**

| | | Comp. Ex. 1A | Comp. Ex. 2A | Comp. Ex. 3A | Comp. Ex. 4A | Comp. Ex. 51A | Comp. Ex. 6A |
|---|---|---|---|---|---|---|---|
| Resin | Layer 1 | Resin C | Resin C | Resin C | Resin G | Resin G | Resin I |
| | Layer 2 | Resin C | Resin C | Resin C | Resin G | Resin G | Resin I |
| | Layer 3 | Resin C | Resin C | Resin C | Resin G | Resin G | Resin I |
| Density (g/cm³) | Front layer | 0.963 | 0.963 | 0.963 | 0.941 | 0.941 | 0.920 |
| | Interm. layer | 0.963 | 0.963 | 0.963 | 0.941 | 0.941 | 0.920 |
| | Rear layer | 0.963 | 0.963 | 0.963 | 0.941 | 0.941 | 0.920 |
| Density of multilayer polyethylene film (g/cm³) | | 0.963 | 0.963 | 0.963 | 0.941 | 0.941 | 0.920 |
| Thickness ratio | Front layer | 1 | 1 | 1 | 1 | 1 | 1 |
| | Interm. layer | 3 | 3 | 3 | 3 | 3 | 3 |
| | Rear layer | 1 | 1 | 1 | 1 | 1 | 1 |
| Thickness ratio of Interm. layer (%) | | 60 | 60 | 60 | 60 | 60 | 60 |
| Probe descent temp. (°C) | Front layer | 155 | 155 | 155 | 142 | 142 | 129 |
| | Interm. layer | 155 | 155 | 155 | 142 | 142 | 129 |
| | Rear layer | 155 | 155 | 155 | 142 | 142 | 129 |
| Undercoat layer | | Yes | Yes | Yes | Yes | Yes | Yes |
| Gas barrier layer | Inorganic oxide layer | Si oxide | Si oxide | Si oxide | Si oxide | Al oxide | Si oxide |
| | Gas barrier coating layer | O-I CF | None | None | O-I CF | PMSCF of PA | O-I CF |
| Adhesive layer | | U-based | U-based | Gas barrier | U-based | U-based | U-based |
| Evaluation | Processing stability | A | A | A | C | C | C |
| | Oxygen barrier prop. | A- | B+ | A- | A- | A- | A- |
| | Oxygen barrier prop. after boiling treatment | B+ | B- | B+ | B | B | B |

| | | | | | | | |
|---|---|---|---|---|---|---|---|
| O-I CF: Organic-inorganic composite film PMSCF of PA: Polyvalent metal salt coating film of polycarboxylic acid U-based: Urethane-based | | | | | | | |

**[Table 5]**

| | | Comp. Ex. 7A | Comp. Ex. 8A | Comp. Ex. 9A | Comp. Ex. 10A |
|---|---|---|---|---|---|
| Resin | Front layer | Resin C | Resin C | Resin D | Resin I |
| | Interm. layer | Resin A | Resin A | Resin D | Resin H |
| | Rear layer | Resin C | Resin C | Resin A | Resin I |
| Density (g/cm³) | Front layer | 0.963 | 0.963 | 0.960 | 0.920 |
| | Interm. layer | 0.950 | 0.950 | 0.960 | 0.962 |
| | Rear layer | 0.963 | 0.963 | 0.950 | 0.920 |
| Density of multilayer polyethylene film (g/cm³) | | 0.955 | 0.959 | 0.958 | 0.9452 |
| Thickness ratio | Front layer | 1 | 1 | 1 | 1 |
| | Interm. layer | 3 | 1 | 3 | 3 |
| | Rear layer | 1 | 1 | 1 | 1 |
| Thickness ratio of Interm. layer (%) | | 60 | 60 | 60 | 60 |
| Probe descent temp. (°C) | Front layer | 155 | 155 | 155 | 129 |
| | Interm. layer | 144 | 144 | 155 | 152 |
| | Rear layer | 155 | 155 | 144 | 129 |
| Undercoat layer | | Yes | Yes | Yes | Yes |
| Gas barrier layer | Inorganic oxide layer | Si oxide | Si oxide | Si oxide | Si oxide |
| | Gas barrier coating layer | O-I CF | O-I CF | O-I CF | O-I CF |
| Adhesive layer | | U-based | U-based | U-based | U-based |
| Evaluation | Processing stability | C | B | A | B |
| | Oxygen barrier prop. | B+ | A- | A- | A- |
| | Oxygen barrier prop. after boiling treatment | B | B+ | B+ | B |

| | | | | | |
|---|---|---|---|---|---|
| O-I CF: Organic-inorganic composite film PMSCF of PA: Polyvalent metal salt coating film of polycarboxylic acid U-based: Urethane-based | | | | | |

**[Table 6]**

| | | Ex. 27A | Ex. 28A | Ex. 29A | Ex. 30A |
|---|---|---|---|---|---|
| Resin | Layer 1 | Resin A | Resin A | Resin A | Resin G |
| | Layer 2 | Resin I | Resin I | Resin B | Resin H |
| | Layer 3 | Resin B | Resin B | Resin B | Resin G + Resin H (50:50) |
| | Layer 4 | Resin I | Resin B | Resin B | Resin G + Resin H (50:50) |
| | Layer 5 | Resin A | Resin B | Resin B | Resin G + Resin H (50:50) |
| | Layer 6 | - | Resin I | Resin B | Resin H- |
| | Layer 7 | - | Resin A | Resin A | Resin G |
| Density (g/cm³) | Layer 1 | 0.950 | 0.950 | 0.950 | 0.941 |
| | Layer 2 | 0.920 | 0.920 | 0.958 | 0.963 |
| | Layer 3 | 0.958 | 0.958 | 0.958 | 0.952 |
| | Layer 4 | 0.920 | 0.958 | 0.958 | 0.952 |
| | Layer 5 | 0.950 | 0.958 | 0.958 | 0.952 |
| | Layer 6 | - | 0.920 | 0.958 | 0.963 |
| | Layer 7 | - | 0.950 | 0.950 | 0.941 |
| Density of front layer (g/cm³) | | 0.950 | 0.950 | 0.950 | 0.941 |
| Density of Interm. layer (g/cm³) | | 0.958 | 0.958 | 0.958 | 0.952 |
| Density or rear layer (g/cm³) | | 0.950 | 0.950 | 0.950 | 0.941 |
| Density of multilayer polyethylene film (g/cm³) | | 0.949 | 0.944 | 0.956 | 0.952 |
| Thickness ratio | Layer 1 | 1 | 0.5 | 1 | 1 |
| | Layer 2 | 0.5 | 1 | 1 | 1 |
| | Layer 3 | 3 | 1 | 1 | 1 |
| | Layer 4 | 0.5 | 1 | 1 | 1 |
| | Layer 5 | 1 | 1 | 1 | 1 |
| | Layer 6 | - | 1 | 1 | 1 |
| | Layer 7 | - | 0.5 | 1 | 1 |
| Thickness ratio of Interm. layer (%) | | 50 | 50 | 71 | 43 |
| Probe descent temp. (°C) | Front layer | 144 | 144 | 144 | 142 |
| | Interm. layer | 150 | 150 | 150 | 146 |
| | Rear layer | 144 | 144 | 144 | 142 |
| Undercoat layer | | Yes | Yes | Yes | Yes |
| Gas barrier layer | Inorganic oxide layer | Si oxide | Si oxide | Si oxide | Si oxide |
| | Gas barrier coating layer | O-I CF | O-I CF | O-I CF | O-I CF |
| Adhesive layer | | U-based | U-based | U-based | U-based |
| Evaluation | Processing stability | A | A | A | A |
| | Oxygen barrier prop. | A+ | A+ | A+ | A+ |
| | Oxygen barrier prop. after boiling treatment | A | A | A | A |

| | | | | | |
|---|---|---|---|---|---|
| O-I CF: Organic-inorganic composite film PMSCF of PA: Polyvalent metal salt coating film of polycarboxylic acid U-based: Urethane-based | | | | | |

### <Preparation of polyethylene film>

### (Examples 1 to 20B and Comparative Examples 1 to 8B)

The resins shown in Tables 7 to 11 as resins for forming a front layer, an intermediate layer, and a rear layer were charged into an extruder and melted and kneaded at 190°C, followed by introducing a polyethylene resin from a 3-layer die to prepare a multilayer polyethylene film, using an air-cooled inflation method. The thickness of the entire multilayer polyethylene film prepared in each of the examples and comparative examples was in the range of 25 µm to 40 µm. The contents of the polyethylene resin in the respective multilayer polyethylene films prepared in the examples and comparative examples were all 90 mass% or more.

### (Example 21B)

The resins shown in Table 12 as resins for forming Layers 1 to 5 were charged into an extruder and melted and kneaded at 190°C, followed by introducing a polyethylene resin from a 5-layer die to prepare a multilayer polyethylene film, in which Layers 1 and 2 formed a front layer, Layer 3 formed an intermediate layer, and Layers 4 and 5 formed a rear layer, using an air-cooled inflation method. The contents of the polyethylene resin in the prepared multilayer polyethylene film were all 90 mass% or more.

### (Example 22B)

The resins shown in Table 12 as resins for forming Layers 1 to 7 were charged into an extruder and melted and kneaded at 190°C, followed by introducing a polyethylene resin from a 7-layer die to prepare a multilayer polyethylene film, in which Layers 1 and 2 formed a front layer, Layers 3 to 5 formed an intermediate layer, and Layers 6 and 7 formed a rear layer, using an air-cooled inflation method. The contents of the polyethylene resin in the prepared multilayer polyethylene film were all 90 mass% or more.

### (Example 23B)

The resins shown in Table 12 as resins for forming Layers 1 to 7 were charged into an extruder and melted and kneaded at 190°C, followed by introducing a polyethylene resin from a 7-layer die to prepare a multilayer polyethylene film, in which Layer 1 formed a front layer, Layers 2 to 6 formed an intermediate layer, and Layer 7 formed a rear layer, using an air-cooled inflation method. The contents of the polyethylene resin in the prepared multilayer polyethylene film were all 90 mass% or more.

### (Example 24B)

The resins shown in Table 12 as resins for forming Layers 1 to 7 were charged into an extruder and melted and kneaded at 190°C, followed by introducing a polyethylene resin from a 7-layer die to prepare a multilayer polyethylene film, in which Layers 1 and 2 formed a front layer, Layers 3 to 5 formed an intermediate layer, and Layers 6 and 7 formed a rear layer, using an air-cooled inflation method. The contents of the polyethylene resin in the prepared multilayer polyethylene film were all 90 mass% or more.

### <Preparation of laminate>

The front layer-side surface of the multilayer polyethylene film prepared in each of Examples 1 to 20B and Comparative Examples 1 to 8B was subjected to corona treatment. Next, an anchor coat layer, inorganic oxide layer, gas barrier coating layer, adhesive layer, and sealant layer were formed on the surface of the multilayer polyethylene film using the method described later to obtain the configurations shown in Tables 7 to 11, the layers were laminated in the order of multilayer polyethylene film / anchor coat layer / inorganic oxide layer / gas barrier coating layer / adhesive layer / sealant layer, and aged at 40°C for 4 days to obtain a laminate. The contents of the polyethylene resin in the multilayer polyethylene films prepared in the examples and comparative examples were 90 mass% or more.

The rear layer-side surface of the multilayer polyethylene film prepared in each of Examples 21 to 24B was subjected to corona treatment. Then, an anchor coat layer, inorganic oxide layer, gas barrier coating layer, adhesive layer, and sealant layer were formed on the surface of the multilayer polyethylene film using the method described later to obtain the configurations shown in Table 6. Next, a LA7735 (product name, polyisocyanate component) and a LA6159 (product name, polyol component) both manufactured by Henkel Japan Co., Ltd. were mixed together in a mass ratio of 100:45 in a two-liquid mixture supply device to obtain a two-part curing type urethane adhesive. The urethane adhesive was applied to the surface of the multilayer polyethylene film facing away from the surface thereof near the sealant layer using a solventless adhesive laminator under the conditions of processing speed of 100 m/min and doctor roll and coating roll temperatures of 60°C so that the amount of the adhesive applied was 2.1 g/m². Next, an unstretched polyethylene ( HDPE film, product name: HS31, manufactured by Tamapoly Co., Ltd.) was bonded to the adhesive layer applied, and aged at 40°C for 1day to obtain a laminate. The contents of the polyethylene resin in the multilayer polyethylene films prepared in the examples and comparative examples were 90 mass% or more.

### <Anchor coat layer>

An acrylic polyol and tolylene diisocyanate were mixed together so that the number of OH groups of the acrylic polyol was equivalent to the number of NCO groups of the tolylene diisocyanate, and the mixture was diluted with ethyl acetate so that the total solid content (total mass of the acrylic polyol and tolylene diisocyanate) was 5 mass%. β-(3,4-epoxycyclohexyl)trimethoxysilane was added to and mixed with the diluted mixture so that the content thereof was 5 parts by mass relative to the total mass, i.e., 100 parts by mass, of the acrylic polyol and tolylene diisocyanate, thereby preparing an anchor coat layer-forming composition (anchor coating agent). An anchor coat layer was formed by applying the anchor coat layer-forming composition onto the surface of the corona-treated multilayer polyethylene film using gravure coating, followed by drying. The amount of the applied polyester resin in the anchor coat layer was 0.1 g/m².

### <Inorganic oxide layer>

If the inorganic oxide layer was silicon oxide, an electron beam heating-type vacuum deposition device was used to form a transparent inorganic oxide layer made of the silicon oxide and having a thickness of 30 nm.

If the inorganic oxide layer was aluminum oxide, an electron beam heating-type vacuum deposition device was used to form a transparent inorganic oxide layer made of the aluminum oxide and having a thickness of 15 nm.

### (Gas barrier coating layer)

The following Liquid A, Liquid B, and Liquid C were mixed together in a mass ratio of 70/20/10 to prepare a gas barrier coating agent. The gas barrier coating agent was applied using gravure coating and dried to form a gas barrier coating layer having a thickness of 0.3 µm.
Liquid A: Hydrolysis solution with a solid content of 5 mass% (SiO₂ equivalent) obtained by adding 17.9 g of tetraethoxysilane (Si(OC₂H₅)₄), 10 g of methanol, and 72.1 g of 0.1N hydrochloric acid, and stirring the mixture for 30 minutes for hydrolysis
Liquid B: Mixed solution obtained by mixing 5 mass% polyvinyl alcohol solution and methanol in a mass ratio of 95:5
Liquid C: Hydrolysis solution of 1,3,5-tris(3-trialkoxysilylpropyl) isocyanurate diluted with a water/isopropyl alcohol mixture (mass ratio of water: isopropyl alcohol was 1:1) so that the solid content was 5 mass%

### <Adhesive layer>

Either of the following urethan adhesive and the gas barrier adhesive was applied using a dry lamination method and dried to form an adhesive layer having a thickness of 3 µm.

### (Urethane adhesive)

A urethane adhesive was prepared by mixing 11 parts by mass of TAKENATE A52 (manufactured by Mitsui Chemicals, Inc.) and 84 parts by mass of ethyl acetate with 100 parts by mass of TAKELAC A525 (manufactured by Mitsui Chemicals, Inc.).

### (Gas barrier adhesive)

A gas barrier adhesive was obtained by mixing 16 parts by mass of MAXIVE C93T (manufactured by Mitsubishi Gas Chemical Company, Inc.) and 5 parts by mass of MAXIVE M-100 (manufactured by Mitsubishi Gas Chemical Company, Inc.) with 23 parts by mass of solvent in which ethyl acetate and methanol were mixed in a mass ratio of 1:1.

### <Sealant layer>

As a sealant layer, an unstretched film made of a linear low-density polyethylene resin (LLDPE) and having a thickness of 60 µm (product name: TUX MC-S manufactured by Mitsui Chemicals Tohcello Co., Ltd.) was used.

### [Evaluation]

### <Processing stability>

After forming the gas barrier layer, the multilayer polyethylene film was visually observed and evaluated for processing stability based on the following evaluation criteria. The evaluation results are shown in Tables 7 to 12.
A: No wrinkling was observed on the exterior and roll of the multilayer polyethylene film.
B: Minor wrinkling was observed on either the exterior or roll of the multilayer polyethylene film.
C: Significant wrinkling was observed on either the exterior or roll of the multilayer polyethylene film.

### <Gas barrier properties>

Oxygen permeability (cm³/(m²·day·atm)) of the laminate prepared in each of the examples and comparative examples was measured in an atmosphere of 30°C and 70%RH using an oxygen permeability measuring device (product name: OXTRAN-2/20 manufactured by MOCON Inc.), and gas barrier properties were evaluated based on the following evaluation criteria. The evaluation results are shown in Tables 7 to 12.
A+: Oxygen permeability was less than 2 cm³/(m²·day·atm).
A: Oxygen permeability was 2 cm³/(m²·day·atm) or more and less than 5 cm³/(m²·day·atm).
A-: Oxygen permeability was 5 cm³/(m²·day·atm) or more and less than 10 cm³/(m²·day·atm).
B+: Oxygen permeability was 10 cm³/(m²·day·atm) or more and less than 20 cm³/(m²·day·atm).
B: Oxygen permeability was 20 cm³/(m²·day·atm) or more and less than 50 cm³/(m²·day·atm).
B-: Oxygen permeability was 50 cm³/(m²·day·atm) or more and less than 100 cm³/(m²·day·atm).
C-: Oxygen permeability was 100 cm³/(m²·day·atm) or more.

### <Gas barrier properties after boiling treatment>

The laminate prepared in each of the examples and comparative examples was cut into two pieces at 15 cm x 10 cm in size, and these two laminate pieces were overlapped with each other with their sealant layers facing each other, and then impulse-sealed on three sides to form a pouch. 150 ml of water, as contents, was charged into the pouch and the remaining one side was impulse-sealed to prepare a pouch (packaging bag) with four sides sealed. The prepared pouch was subjected to boiling treatment at 95°C for 30 minutes using a boiling treatment device. After the boiling treatment, the pouch was opened to remove the contents, sufficiently dried, and then oxygen permeability of the pouch after boiling treatment was measured using the method mentioned above to evaluate gas barrier properties. The evaluation results are shown in Tables 7 to 12.

### <Gas barrier properties after bending>

The laminate prepared in each of the examples and comparative examples was cut into 295mm long × 210mm wide in size for use as an evaluation sample. The evaluation sample was loaded on the fixed head of a Gelbo Flex tester (product name: BE-1005, manufactured by Tester Sangyo Co., Ltd.) so as to have a cylindrical shape of 87.5 mm diameter × 210 mm. The evaluation sample was subjected to bending, with both ends thereof held at an initial gripping interval of 175 mm therebetween, by applying a 440° twist with a 87.5 mm stroke, and repeating this motion 10 times at a rate of 40 times/min. Next, oxygen permeability of the evaluation sample after bending was measured using the above method to evaluate gas barrier properties. The evaluation results are shown in Tables 7 to 12.

### (Adhesion)

A 15 mm wide strip test piece was cut out from the laminate prepared in each of the examples and comparative examples to measure the lamination strength between the multilayer polyethylene film and the heat seal layer using a Tensilon universal testing machine RTC-1250 manufactured by Orientec Co., Ltd, according to JIS Z 1707. Lamination strength was measured using a T-peel method under standard conditions. The evaluation results are shown in Tables 7 to 12.

### <Adhesion after boiling treatment>

The laminate prepared in each of the examples and comparative examples was cut into two pieces at 15 cm x 10 cm in size, and these two laminate pieces were overlapped with each other with their sealant layers facing each other, and then impulse-sealed on three sides to form a pouch. 200 ml of water, as contents, was charged into the pouch and the remaining one side was impulse-sealed to prepare a pouch (packaging bag) with four sides sealed. The prepared pouch was subjected to boiling treatment at 95°C for 30 minutes using a boiling treatment device. After the boiling treatment, the pouch was opened to remove the contents, sufficiently dried, and then a 15 mm wide strip test piece was cut out from the pouch. According to JIS Z 1707, lamination strength between the multilayer polyethylene film and the heat seal layer was measured using a Tensilon universal testing machine RTC-1250 manufactured by Orientec Co., Ltd. Lamination strength was measured using a T-peel method under standard conditions. The evaluation results are shown in Tables 7 to 12.

**[Table 7]**

| | | Ex. 1B | Ex. 2B | Ex, 3B | Ex, 4B | Ex. 5B | Ex. 6B | Ex. 7B | Ex. 8B | Ex. 9B |
|---|---|---|---|---|---|---|---|---|---|---|
| Resin | Front layer | Resin A | Resin A | Resin A | Resin A | Resin A | Resin A | Resin A | Resin A | Resin A |
| | Interm. layer | Resin B | Resin B | Resin B | Resin B | Resin B | Resin B | Resin B | Resin B | Resin B |
| | Rear layer | Resin A | Resin A | Resin A | Resin A | Resin A | Resin A | Resin A | Resin A | Resin A |
| Density (g/cm³) | Front layer | 0.950 | 0.950 | 0.950 | 0.950 | 0.950 | 0.950 | 0.950 | 0.950 | 0.950 |
| | Interm. layer | 0.958 | 0.958 | 0.958 | 0.958 | 0.958 | 0.958 | 0.958 | 0.958 | 0.958 |
| | Rear layer | 0.950 | 0.950 | 0.950 | 0.950 | 0.950 | 0.950 | 0.950 | 0.950 | 0.950 |
| Density of multilayer polyethylene film (g/cm³) | | 0.955 | 0.953 | 0.954 | 0.956 | 0.955 | 0.955 | 0.955 | 0.955 | 0.955 |
| Thickness ratio | Front layer | 1 | 1 | 1 | 1 | 1 | 1 | 1 | 1 | 1 |
| | Interm. layer | 3 | 1 | 2 | 6 | 3 | 3 | 3 | 3 | 3 |
| | Rear layer | 1 | 1 | 1 | 1 | 1 | 1 | 1 | 1 | 1 |
| Thickness ratio of Interm. layer (%) | | 60 | 33 | 50 | 75 | 60 | 60 | 60 | 60 | 60 |
| Probe descent temp. (°C) | Front layer | 144 | 144 | 144 | 144 | 144 | 144 | 144 | 144 | 144 |
| | Interm. layer | 150 | 150 | 150 | 150 | 150 | 150 | 150 | 150 | 150 |
| | Rear layer | 144 | 144 | 144 | 144 | 144 | 144 | 144 | 144 | 144 |
| Undercoat layer | | Yes | Yes | Yes | Yes | No | Yes | Yes | Yes | Yes |
| Gas barrier layer | Inorganic oxide layer | Si oxide | Si oxide | Si oxide | Si oxide | Si oxide | Al oxide | Si oxide | Si oxide | Si oxide |
| | Gas barrier coating layer | Yes | Yes | Yes | Yes | Yes | Yes | No | No | Yes |
| Adhesive layer | | U-based | U-based | U-based | U-based | U-based | U-based | U-based | EP-based | U-based |
| Degree of molecular orientation MOR | | 1.06 | 1.04 | 1.04 | 1.06 | 1.06 | 1.06 | 1.06 | 1.06 | 1.06 |
| Processing stability | | A | A | A | A | A | A | A | A | A |
| Gas barrier prop. | Immediately after prep. | A+ | A+ | A+ | A+ | A+ | A+ | A | A+ | A+ |
| | After boiling treatment | A | A- | A | A | A | A | A- | A+ | A |
| | After bending | B+ | B+ | B+ | B+ | B+ | B+ | B | A- | B+ |
| Adhesion (N/15 mm) | Immediately after prep. | >10 | >10 | >10 | >10 | >10 | >10 | >10 | >10 | >10 |
| | After boiling treatment | >10 | >10 | >10 | >10 | >10 | >10 | >10 | >10 | >10 |

| | | | | | | | | | | |
|---|---|---|---|---|---|---|---|---|---|---|
| U-based: Urethane-based EP-based: Epoxy-based | | | | | | | | | | |

**[Table 8]**

| | | Ex. 10B | Ex. 11B | Ex, 12B | Ex, 13B | Ex. 14B | Ex. 15B | Ex. 16B |
|---|---|---|---|---|---|---|---|---|
| Resin | Front layer | Resin A | Resin A | Resin A | Resin E | Resin F | Resin G | Resin G + Resin I (80:20) |
| | Interm. layer | Resin C | Resin C | Resin D | Resin C | Resin G | Resin H | Resin G |
| | Rear layer | Resin A | Resin A + Resin C (50:50) | Resin D | Resin E | Resin F | Resin G | Resin G + Resin I (80:20) |
| Density (g/cm³) | Front layer | 0.950 | 0.950 | 0.950 | 0.944 | 0.926 | 0.941 | 0.937 |
| | Interm. layer | 0.963 | 0.963 | 0.960 | 0.963 | 0.941 | 0.962 | 0.941 |
| | Rear layer | 0.950 | 0.957 | 0.960 | 0.944 | 0.926 | 0.941 | 0.937 |
| Density of multilayer polyethylene film (g/cm³) | | 0.958 | 0.959 | 0.958 | 0.955 | 0.935 | 0.954 | 0.939 |
| Thickness ratio | Front layer | 1 | 1 | 1 | 1 | 1 | 1 | 1 |
| | Interm. layer | 3 | 3 | 3 | 3 | 3 | 3 | 3 |
| | Rear layer | 1 | 1 | 1 | 1 | 1 | 1 | 1 |
| Thickness ratio of Interm. layer (%) | | 60 | 60 | 60 | 60 | 60 | 60 | 60 |
| Probe descent temp. (°C) | Front layer | 144 | 144 | 144 | 146 | 133 | 142 | 139 |
| | Interm. layer | 155 | 155 | 155 | 155 | 142 | 152 | 142 |
| | Rear layer | 144 | 146 | 155 | 146 | 133 | 142 | 139 |
| Undercoat layer | | Yes | Yes | Yes | Yes | Yes | Yes | Yes |
| Gas barrier layer | Inorganic oxide layer | Si oxide | Si oxide | Si oxide | Si oxide | Si oxide | Si oxide | Si oxide |
| | Gas barrier coating layer | Yes | Yes | Yes | Yes | Yes | Yes | Yes |
| Adhesive layer | | U-based | U-based | U-based | U-based | U-based | U-based | U-based |
| Degree of molecular orientation MOR | | 1.06 | 1.06 | 1.06 | 1.06 | 1.03 | 1.05 | 1.06 |
| Processing stability | | A | A | A | A | A | A | A |
| Gas barrier prop. | Immediately after prep. | A+ | A+ | A | A+ | A | A+ | A+ |
| | After boiling treatment | A- | A | A- | A | A- | A | A |
| | After bending | B+ | B+ | B+ | B+ | B | B+ | B+ |
| Adhesion (N/15 mm) | Immediately after prep. | >10 | >10 | >10 | >10 | >10 | >10 | >10 |
| | After boiling treatment | >10 | >10 | >10 | >10 | >10 | >10 | >10 |

| | | | | | | | | |
|---|---|---|---|---|---|---|---|---|
| U-based: Urethane-based | | | | | | | | |

**[Table 9]**

| | | Ex. 17B | Ex. 18B | Ex, 19B | Ex, 20B |
|---|---|---|---|---|---|
| Resin | Front layer | Resin A | Resin A | Resin A | Resin A |
| | Interm. layer | Resin B | Resin B | Resin B | Resin B |
| | Rear layer | Resin A | Resin A | Resin A | Resin A |
| Density (g/cm³) | Front layer | 0.950 | 0.950 | 0.950 | 0.950 |
| | Interm. layer | 0.958 | 0.958 | 0.958 | 0.958 |
| | Rear layer | 0.950 | 0.950 | 0.950 | 0.950 |
| Density of multilayer polyethylene film (g/cm³) | | 0.955 | 0.955 | 0.955 | 0.955 |
| Thickness ratio | Front layer | 1 | 1 | 1 | 1 |
| | Interm. layer | 3 | 3 | 3 | 3 |
| | Rear layer | 1 | 1 | 1 | 1 |
| Thickness ratio of Interm. layer (%) | | 60 | 60 | 60 | 60 |
| Probe descent temp. (°C) | Front layer | 144 | 144 | 144 | 144 |
| | Interm. layer | 150 | 150 | 150 | 150 |
| | Rear layer | 144 | 144 | 144 | 144 |
| Undercoat layer | | Yes | Yes | Yes | Yes |
| Gas barrier layer | Inorganic oxide layer | Si oxide | Si oxide | Si oxide | Si oxide |
| | Gas barrier coating layer | Yes | Yes | No | Yes |
| Adhesive layer | | U-based | U-based | U-based | U-based |
| 2^{nd} adhesive layer | | U-based | Solventless | EP-based | U-based |
| Substrate | | HS31 | HS31 | HS31 | SMUQ |
| Degree of molecular orientation MOR | | 1.06 | 1.06 | 1.06 | 1.06 |
| Processing | stability | A | A | A | A |
| Gas barrier prop. | Immediately after prep. | A+ | A+ | A+ | A+ |
| | After boiling treatment | A | A | A+ | A |
| | After bending | B+ | B+ | A- | B+ |
| Adhesion (N/15 mm) | Immediately after prep. | >10 | >10 | >10 | >10 |
| | After boiling treatment | >10 | >10 | >10 | >10 |

| | | | | | |
|---|---|---|---|---|---|
| U-based: Urethane-based EP-based: Epoxy-based | | | | | |

**[Table 10]**

| | | Comp. Ex. 1B | Comp. Ex. 2B | Comp. Ex. 3B | Comp. Ex. 4B | Comp. Ex. 5B |
|---|---|---|---|---|---|---|
| Resin | Front layer | Resin C | Resin C | Resin C | Resin G | Resin I |
| | Interm. layer | Resin C | Resin C | Resin C | Resin G | Resin I |
| | Rear layer | Resin C | Resin C | Resin C | Resin G | Resin I |
| Density (g/cm³) | Front layer | 0.963 | 0.963 | 0.963 | 0.941 | 0.920 |
| | Interm. layer | 0.963 | 0.963 | 0.963 | 0.941 | 0.920 |
| | Rear layer | 0.963 | 0.963 | 0.963 | 0.941 | 0.920 |
| Density of multilayer polyethylene film (g/cm³) | | 0.963 | 0.963 | 0.963 | 0.941 | 0.920 |
| Thickness ratio | Front layer | 1 | 1 | 1 | 1 | 1 |
| | Interm. layer | 3 | 3 | 3 | 3 | 3 |
| | Rear layer | 1 | 1 | 1 | 1 | 1 |
| Thickness ratio of Interm. layer (%) | | 60 | 60 | 60 | 60 | 60 |
| Probe descent temp. (°C) | Front layer | 155 | 155 | 155 | 142 | 129 |
| | Interm. layer | 155 | 155 | 155 | 142 | 129 |
| | Rear layer | 155 | 155 | 155 | 142 | 129 |
| Undercoat layer | | Yes | Yes | Yes | Yes | Yes |
| Gas barrier layer | Inorganic oxide layer | Si oxide | Si oxide | Si oxide | Si oxide | Si oxide |
| | Gas barrier coating layer | Yes | No | No | Yes | Yes |
| Adhesive layer | | U-based | U-based | EP-based | U-based | U-based |
| Degree of molecular orientation MOR | | 1.04 | 1.02 | 1.06 | 1.06 | 1.05 |
| Processing | stability | A | A | A | C | C |
| Gas barrier prop. | Immediately after prep. | A- | B+ | A- | A- | A- |
| | After boiling treatment | B+ | B- | B+ | B | B |
| | After bending | B | B- | B | B | B |
| Adhesion (N/15 mm) | Immediately after prep. | >10 | >10 | >10 | >10 | >10 |
| | After boiling treatment | >10 | >10 | >10 | >10 | >10 |

| | | | | | | |
|---|---|---|---|---|---|---|
| U-based: Urethane-based EP-based: Epoxy-based | | | | | | |

**[Table 11]**

| | | Comp. Ex. 6B | Comp. Ex. 7B | Comp. Ex. 8B |
|---|---|---|---|---|
| Resin | Front layer | Resin C | Resin D | Resin I |
| | Interm. layer | Resin A | Resin D | Resin H |
| | Rear layer | Resin C | Resin A | Resin I |
| Density (g/cm³) | Front layer | 0.963 | 0.960 | 0.920 |
| | Interm. layer | 0.950 | 0.960 | 0.962 |
| | Rear layer | 0.963 | 0.950 | 0.920 |
| Density of multilayer polyethylene film (g/cm³) | | 0.955 | 0.958 | 0.945 |
| Thickness ratio | Front layer | 1 | 1 | 1 |
| | Interm. layer | 3 | 3 | 3 |
| | Rear layer | 1 | 1 | 1 |
| Thickness ratio of Interm. layer (%) | | 60 | 60 | 60 |
| Probe descent temp. (°C) | Front layer | 155 | 155 | 129 |
| | Interm. layer | 144 | 155 | 155 |
| | Rear layer | 155 | 144 | 129 |
| Undercoat layer | | Yes | Yes | Yes |
| Gas barrier layer | Inorganic oxide layer | Si oxide | Si oxide | Si oxide |
| | Gas barrier coating layer | Yes | Yes | Yes |
| Adhesive layer | | U-based | U-based | U-based |
| Degree of molecular orientation MOR | | 1.06 | 1.06 | 1.05 |
| Processing stability | | C | A | B |
| Gas barrier prop. | Immediately after prep. | B+ | A- | A- |
| | After boiling treatment | B | B+ | B |
| | After bending | B- | B | B |
| Adhesion (N/15 mm) | Immediately after prep. | >10 | >10 | >10 |
| | After boiling treatment | >10 | >10 | >10 |

| | | | | |
|---|---|---|---|---|
| U-based: Urethane-based | | | | |

**[Table 12]**

| | | Ex. 21B | Ex. 22B | Ex. 23B | Ex. 24B |
|---|---|---|---|---|---|
| Resin | Layer 1 | Resin A | Resin A | Resin A | Resin G |
| | Layer 2 | Resin I | Resin I | Resin B | Resin H |
| | Layer 3 | Resin B | Resin B | Resin B | Resin G + Resin H (50:50) |
| | Layer 4 | Resin I | Resin B | Resin B | Resin G + Resin H (50:50) |
| | Layer 5 | Resin A | Resin B | Resin B | Resin G + Resin H (50:50) |
| | Layer 6 | - | Resin I | Resin B | Resin H |
| | Layer 7 | - | Resin A | Resin A | Resin G |
| Density (g/cm³) | Layer 1 | 0.950 | 0.950 | 0.950 | 0.941 |
| | Layer 2 | 0.920 | 0.920 | 0.958 | 0.963 |
| | Layer 3 | 0.958 | 0.958 | 0.958 | 0.952 |
| | Layer 4 | 0.920 | 0.958 | 0.958 | 0.952 |
| | Layer 5 | 0.950 | 0.958 | 0.958 | 0.952 |
| | Layer 6 | - | 0.920 | 0.958 | 0.963 |
| | Layer 7 | - | 0.950 | 0.950 | 0.941 |
| Density of front layer (g/cm³) | | 0.950 | 0.950 | 0.950 | 0.941 |
| Density of Interm. layer (g/cm³) | | 0.958 | 0.958 | 0.958 | 0.952 |
| Density of rear layer (g/cm³) | | 0.950 | 0.950 | 0.950 | 0.941 |
| Density of multilayer polyethylene film (g/cm³) | | 0.949 | 0.944 | 0.956 | 0.952 |
| Thickness ratio | Layer 1 | 1 | 0.5 | 1 | 1 |
| | Layer 2 | 0.5 | 1 | 1 | 1 |
| | Layer 3 | 3 | 1 | 1 | 1 |
| | Layer 4 | 0.5 | 1 | 1 | 1 |
| | Layer 5 | 1 | 1 | 1 | 1 |
| | Layer 6 | - | 1 | 1 | 1 |
| | Layer 7 | - | 0.5 | 1 | 1 |
| Thickness ratio of Interm. layer (%) | | 50 | 50 | 71 | 43 |
| Probe descent temp. (°C) | Front layer | 144 | 144 | 144 | 142 |
| | Interm. layer | 150 | 150 | 150 | 146 |
| | Rear layer | 144 | 144 | 144 | 142 |
| Undercoat layer | | Yes | Yes | Yes | Yes |
| Gas barrier layer | Inorganic oxide layer | Si oxide | Si oxide | Si oxide | Si oxide |
| | Gas barrier coating layer | Yes | Yes | Yes | Yes |
| Adhesive layer | | U-based | U-based | U-based | U-based |
| Degree of molecular orientation MOR | | 1.06 | 1.04 | 1.04 | 1.06 |
| Processing stability | | A | A | A | A |
| Gas barrier prop. | Immediately after prep. | A+ | A+ | A+ | A+ |
| | After boiling treatment | A | A- | A | A |
| | After bending | B+ | B+ | B+ | B+ |
| Adhesion (N/15 mm) | Immediately after prep. | >10 | >10 | >10 | >10 |
| | After boiling treatment | >10 | >10 | >10 | >10 |

| | | | | | |
|---|---|---|---|---|---|
| U-based: Urethane-based | | | | | |

### [Reference Signs List]

10, 30, 40, 50, 60 ... Multilayer polyethylene film
11, 31, 41, 51, 61 ... Front layer
12, 32, 42, 52, 62 ... Intermediate layer
13, 33, 43, 53, 63 ... Rear layer
20 ... Gas barrier layer
21 ... Inorganic oxide layer
22 ... Gas barrier coating layer
100, 200, 300 ... Gas barrier film
130 ... Adhesive layer
140 ... Sealant layer
70 ... Second adhesive layer
80 ... Substrate
400, 500, 600, 700 ... Laminate

## Claims

1. A gas barrier film comprising a multilayer polyethylene film and a gas barrier layer, wherein
the multilayer polyethylene film includes at least three layers of a front layer, an intermediate layer, and a rear layer in this order on the gas barrier layer side;
the intermediate layer has a probe descent temperature which is higher than that of the front layer and is higher than or equal to that of the rear layer;
the front layer is constituted of a medium-density polyethylene resin having a density of 0.926 g/cm³ or more, or a high-density polyethylene resin; and
the gas barrier layer includes at least either of an inorganic oxide layer and a gas barrier coating layer.

2. The gas barrier film according to claim 1, wherein the multilayer polyethylene film has a density of 0.942 g/cm³ or more.

3. The gas barrier film according to claim 1, wherein the intermediate layer has a probe descent temperature of 125°C or higher.

4. The gas barrier film according to claim 1, wherein the intermediate layer has a thickness that is 33% or more of a thickness of the multilayer polyethylene film.

5. The gas barrier film according to claim 1, wherein the multilayer polyethylene film is an unstretched film.

6. The gas barrier film according to claim 1, wherein
the gas barrier layer includes the inorganic oxide layer; and
the inorganic oxide layer contains at least either of aluminum oxide and silicon oxide.

7. The gas barrier film according to claim 1, wherein
the gas barrier layer includes the gas barrier coating layer; and
the gas barrier coating layer contains a water-soluble polymer and at least one selected from a group consisting of metal alkoxides, their hydrolysates, and reaction products thereof.

8. The gas barrier film according to claim 1, wherein
the gas barrier layer includes the gas barrier coating layer; and
the gas barrier coating layer contains at least one selected from a group consisting of silane coupling agents, their hydrolysates, and reaction products thereof.

9. The gas barrier film according to claim 1, wherein
the gas barrier layer includes the gas barrier coating layer; and
the gas barrier coating layer contains a polyvalent metal salt of a carboxylic acid.

10. A laminate comprising
the gas barrier film according to any one of claims 1 to 9;
an adhesive layer disposed on a surface of the gas barrier layer facing away from a surface provided with the multilayer polyethylene film; and
a sealant layer disposed via the adhesive layer.

11. The laminate according to claim 10, wherein a content of a polyethylene resin in the laminate is 90 mass% or more relative to a total mass of the laminate.

12. The laminate according to claim 10, wherein the adhesive layer contains a gas barrier adhesive.

13. The laminate according to claim 10 further comprising
a second adhesive layer disposed on a rear layer-side surface of the multilayer polyethylene film; and
a substrate disposed via the second adhesive layer.

14. A packaging material comprising the laminate according to claim 10.
